# EUROPEAN PATENT APPLICATION

(11) **EP 4 801 085 A1**
(43) Date of publication of application: **02.09.2026**
(21) Application number: 25160864.2
(22) Date of filing: 28.02.2025
(51) Int. Cl.: H04W 12/06, H04W 12/08

(54) **METHOD, COMPUTER PROGRAM, CORE NETWORK, APPARATUS FOR A CORE NETWORK, USER EQUIPMENT**

(71) Applicant: Deutsche Telekom AG, 53113 Bonn (DE)
(72) Inventor: BELSCHNER, Jakob, 60322 Frankfurt/M. (DE); TSAI, Bernard, 65203 Wiesbaden (DE); BAYER, Nico, 61231 Bad Nauheim (DE); ZECHLIN, Sebastian, 53175 Bonn (DE)
(74) Representative: 2SPL Patentanwälte PartG mbB

(57) **Abstract**

Provided is a method for a mobile telecommunication network for controlling access of user equipment, UE, to an external network, using a walled garden environment in a core network. The walled garden environment is configured to allow, before authentication of the UE, only at least one pre-approved service to the UE. The method includes receiving, at the core network, a connection request from the UE. The connection request further comprises authentication data of the UE. The method further includes routing the connection request into the walled garden environment. The method further includes determining, based on the authentication data, an access policy for the UE. The method further includes establishing bidirectional data communication between the UE and the external network.

## Description

### Field

The present disclosure relates to a method, computer program, core network, apparatus for a core network, user equipment for establishing a walled garden environment in a telecommunications network.

### Background

Telecommunication networks may rely on sophisticated and complex standards which have grown over decades. Typical telecommunication networks may be fixed networks serving customers via a fiber-optic, or copper-cable based network. For these networks there may be standards defined by the International Telecommunication Union - Telecommunication Standardization Sector (ITU-T) and Broadband Forum. On the other hand, mobile networks serving customers via 4G or 5G also exist. These networks may be standardized by the 3rd Generation Partnership Project (3GPP).

Telecommunication networks started with circuit-switched communication. In such an environment, a communication session (e.g. a phone call) was established, maintained for a certain time and then terminated. Towards the end of the 20th century, packet-based data communication became more and more dominant. Data packets were first transferred within circuit-switched sessions (dial-up connections). With GPRS in mobile and DSL in fixed networks, telecommunication networks evolved towards packet-switched networks. The way packet-switched communication is implemented in telecommunication networks reused some of the principles already used in circuit-switched communications. This is especially the use of "sessions". An end-user device establishes a session (e.g. a PPPoE session in fixed networks and a PDU session in mobile networks) which is maintained and later terminated. This principle helped to reuse the methodology used in circuit-switched communication (e.g. for billing purposes) and has been used since then.

### Summary

The present disclosure is based on the finding that the above-mentioned re-use of circuit-switch principles in packet-based telecommunication networks may lead to the circumstance that telecommunication equipment (hard- and software) may be similar to typical IT equipment, but deviates when it comes to details. It is the intention of the present disclosure to remove the specifics of telecommunication network architectures as much as possible and replace them with functionality which is used in other packet-oriented networks. Besides, the following drawbacks of current telecommunication networks have been identified:
- There may be dedicated core networks and technologies for fixed and mobile networks, although the provided functionality (e.g., authentication, charging) is partially the same.
- The current architecture and protocols used may be specific to telecommunication networks, such that achieving synergies with other industries is difficult.
- Telecommunication networks might not be aware of the actual customer intent. Instead, they provide a certain network capacity in the assumption that it is sufficient for fulfilling all customer demands. To avoid an impact on customer experience, network capacity may often be over-dimensioned.

As a result, current architectures may suffer from economical inefficiencies, such as:
- Complicated and costly equipment (hard- and software) specific to telecommunication networks. Although there may be similar solutions for functions of telecommunication networks (e.g., authentication) which may also used in other industries (e.g., by cloud service providers) these might not be useable for telecommunication networks today. This may especially be relevant when other industries can achieve higher economies of scale.
- Current architectures may be difficult to maintain and evolve: Specific knowledge and skills may be required to operate telecommunication networks. Any kind of evolution may need to integrate with a huge base of legacy protocols and systems.
- Over-dimensioning may lead to inefficiencies especially in terms of energy efficiency.

The aspects of the present disclosure are described in the independent claims. Further aspects are set forth in the dependent claims, the drawings, and the following description.

According to a first aspect, the disclosure provides a method for a mobile telecommunication network for controlling access of user equipment, UE, to an external network, using a walled garden environment in a core network. The walled garden environment is configured to allow, before authentication of the UE, only at least one pre-approved service to the UE. The method comprises receiving, at the core network, a connection request from the UE, the connection request further comprising authentication data of the UE. The method further comprises routing the connection request into the walled garden environment. The method further comprises determining, based on the authentication data, an access policy for the UE. The method further comprises establishing bidirectional data communication between the UE and the external network.

Thereby, safe authentication may be provided.

In some examples, determining the access policy for the UE comprises validating the authentication data against a distributed ledger that maintains digital trust credentials for the UE.

Thereby, security may be further enhanced.

In some examples, the bidirectional data communication is established by a programmable transport network.

Thereby, efficient routing may be enabled.

In some examples, routing the connection request into the walled garden environment comprises isolating the connection request within a logically isolated subnetwork established in the core network. In such examples, the routing further comprises providing, within the logically isolated subnetwork, a dedicated authentication interface for the UE. In such examples, the routing further comprises enforcing a restriction on data communication with external networks until the UE's authentication data has been validated and an access policy for the user equipment has been determined.

Thereby, security may be further enhanced.

In some examples, the method further comprises instructing, upon successful authentication, at least one external network to grant access to the UE.

Thereby, communication with the external network may be enabled.

In some examples, the core network is a common core network that is agnostic with respect to an access technology.

Thereby, the network architecture may be simplified.

In some examples, the bidirectional data communication is based on native IP packets exchanged between the UE and the common core network.

Thereby, encapsulation of IP packets may be avoided.

According to a second aspect, the disclosure provides a computer program comprising instructions which, when the program is executed on a computer, causes the computer to carry out the method of the first aspect or to any example relating to the first aspect.

Thereby, similar effects as mentioned above may be achieved.

According to a third aspect, the disclosure provides a non-transitory computer readable medium comprising instructions which, when carried out on processing circuitry, causes the processing circuitry to carry out the method of the first aspect or to any example relating to the first aspect.

Thereby, similar effects as mentioned above may be achieved.

According to a fourth aspect, the disclosure provides a core network comprising processing circuitry configured to receive a connection request from user equipment, UE, the connection request further comprising authentication data of the UE. The processing circuitry is further configured to route the connection request into a walled garden environment within the core network. The processing circuitry is further configured to determine, by the walled garden environment and based on the authentication data, an access policy for the UE. The processing circuitry is further configured to establish bidirectional data communication between the UE and an external network.

Thereby, similar effects as mentioned above may be achieved.

In some examples, the walled garden environment comprises a logically isolated subnetwork within the core network that includes a dedicated authentication interface and policy enforcement circuitry. The subnetwork is configured to restrict data communication with external networks until the user equipment's authentication data has been validated and an access policy has been determined.

Thereby, similar effects as mentioned above may be achieved.

According to a fifth aspect, the disclosure provides an apparatus for a core network. The apparatus comprises processing circuitry configured to provide a logically isolated subnetwork configured to segregate connection requests from user equipment, UE, from the remainder of the core network- The processing circuitry is further configured to receive authentication data from the UE. The processing circuitry is further configured to restrict data communication with external networks until the received authentication data is validated. The processing circuitry is further configured to communicate with a core network controller for updating access policies based on the authentication data.

Thereby, similar effects as mentioned above may be achieved.

According to a sixth aspect, the disclosure provides a user equipment, UE, comprising processing circuitry configured to send a connection request to a core network. The connection request comprises authentication data for a walled garden environment of the core network. Before authentication, the UE is only allowed to use at least one pre-approved service via the walled garden. The processing circuitry is further configured to request, after successful authentication, access to an external network. The processing circuitry is further configured to perform bidirectional data communication with the external network.

Thereby, similar effects as mentioned above may be achieved.

### Brief description of the Figures

Some examples of apparatuses and/or methods will be described in the following by way of example only, and with reference to the accompanying figures, in which
Fig. 1 depicts a flowchart of a method according to the present disclosure
Fig. 2 depicts a block diagram of a telecommunication network according to the present disclosure
Fig. 3 depicts a diagram of a communication network according to the present disclosure to describe the interworking of the different elements to grant access of the UE to the external network and to describe seamless mobility;
Fig. 4 depicts a sequence diagram of an exemplary method according to the present disclosure for establishing a connection;
Fig. 5 depicts a sequence diagram of an exemplary method according to the present disclosure for providing mobility with a network according to the present disclosure;
Fig. 6 depicts a traditional network compared to a network according to the present disclosure;
Fig. 7 depicts an example of hierarchical routing topology according to the present disclosure;
Fig. 8 depicts a sequence diagram of a method according to the present disclosure for assigning IP addresses with different persistency;
Fig. 9 depicts a sequence diagram of an exemplary method of the present disclosure based on which mobility may be realized with a layer 4 protocol (or higher);
Fig. 10 depicts a block diagram of a UE and of a network according to the present disclosure;
Fig. 11 depicts an overview the principles of the present disclosure by means of a high-level block diagram;
Fig. 12 depicts a high-level diagram of a network according to the present disclosure for intent-based communication; and
Fig. 13 depicts a sequence diagram of an exemplary method according to the present disclosure for intent handling.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

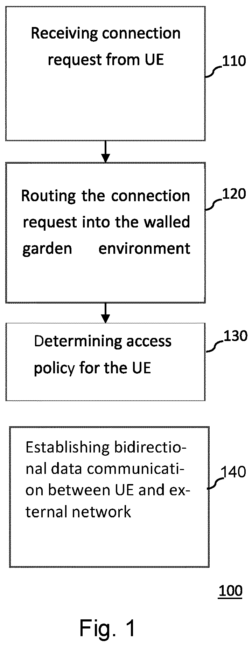

Fig. 1 depicts a method 100 for a mobile telecommunication network for controlling access of UE to an external network, using a walled garden environment in a (common) core network. The walled garden environment may be configured to allow, before authentication of the UE, only at least one pre-approved service to the UE.

A walled garden may refer to a closed digital ecosystem where access to external networks, services, or applications is restricted through technical, contractual, or economic barriers, ensuring that users remain within the provider's controlled environment. It may operate through proprietary APIs, content moderation, access controls (e.g., DRM, firewalls, or platform-specific app stores), and monetization mechanisms (such as revenue-sharing models or exclusive partnerships). A pre-approved service may refer to an application, content, or service that has been vetted and authorized by the ecosystem owner to operate within the closed environment. These services may comply with the platform's technical, security, and business requirements, often integrating through proprietary APIs, adhering to content moderation policies, and sometimes sharing revenue with the platform owner. For example, in the context of telecommunication, an emergency call may be a pre-approved service, as well as authentication itself.

User Equipment (UE) may refer to any device or system configured to connect to a communication network, e.g., to send, receive, or process data, regardless of its form, function, or mobility. It may encompass personal devices such as smartphones, tablets, smartwatches, and augmented/virtual reality glasses, as well as larger systems like vehicles, industrial robots, and computing terminals. The UE may interface with networks through the technology described herein, but the present disclosure may not be limited in that regard as it may interface with other technologies too, such as cellular, Wi-Fi, satellite, or wired connections, and may operate autonomously or under human control. The term UE may include any hardware, software, or integrated system configured to enable interaction with (digital) communication infrastructures.

The method 100 includes 110, receiving, at the core network, a connection request from the UE. A connection request may refer to a user or service attempt to access an external network, application, or resource, which is subject to the platform's access control policies. The request may be evaluated based on predefined rules, such as authentication, compliance with platform restrictions, and approval of services, ensuring that only authorized interactions occur within the controlled ecosystem. An access control policy may define the rules and mechanisms that regulate user and service interactions within the ecosystem, determining which entities can access specific resources, applications, or networks. It may enforce restrictions through authentication, authorization protocols, and compliance checks, ensuring that only approved services or users meet the platform's security, business, and technical requirements.

The connection request may include authentication data of the UE. Authentication data may refer to the credentials or security tokens used to verify the identity of a user, device, or service attempting to access the external network via the walled garden. This data may include passwords, cryptographic keys, biometric information (such as fingerprints or facial recognition), authentication tokens (like OAuth access tokens), or the like. For example, the user may provide a password and a one-time verification code (two-factor authentication), while an authorized third-party app may use an API key to authenticate its connection request.

The method 100 further includes routing, 120, the connection request into the walled garden environment. This may refer to the process of directing a user's or service's access attempt through the platform's controlled infrastructure, ensuring compliance with its access policies. This may be achieved through network filtering, DNS redirection, gateway authentication, SRv6, or the like, which restricts unauthorized external connections and enforces platform-specific rules. For example, a mobile carrier may intercept a user's web request and redirect it to a captive portal, requiring authentication before granting access to pre-approved services within its ecosystem.

The method 100 further includes determining, 130, based on the authentication data, an access policy for the UE. This may refer to the process of evaluating the UE's authentication data to assign specific access permissions within the walled garden. This may involve verifying authentication data, such as user credentials, SIM-based authentication, or cryptographic tokens, to classify the UE's authorization level. Based on this classification, the system may apply predefined access control policies, which may grant, restrict, or limit access to certain services, applications, or network resources. For example, a mobile carrier may use SIM authentication to determine that a UE is subscribed to a premium plan, allowing access to highspeed data and exclusive content, while restricting other devices to basic services.

The method further includes establishing, 140, bidirectional data communication between the UE and the external network (upon successful authentication). Bidirectional communication may refer to exchange of data between two entities in both directions, allowing each to send and receive information. For example, the UE may send IP packets for an intended recipient of the IP packets (as will be discussed below under reference of "plain IP" or "native IP" without limiting the present disclosure in that regard). After authentication, these IP packets may be routed, by a transport network, to the intended recipient (e.g., instead of to the (common) core - discussed below). On the other hand, IP packets intended for the UE may be routed to the UE. The external network may be any network external to the telecommunications network the UE and the common core reside in or establish, such as the internet, a value added service (VAS) network (e.g., network via which the VAS is connected), or the like.

In some examples, determining the access policy for the UE includes validating the authentication data against a distributed ledger that maintains digital trust credentials for the UE.

A distributed ledger may refer to a decentralized database that records transactions or data entries across multiple nodes in a network or between networks (e.g., managed by different operators), ensuring transparency, security, and immutability. For example, a customer of a partner operator may be based on credentials reflected in the distributed ledger (e.g., SSI (self-sovereign identities) technology may be used) to gain access to the resources of the "visited" operator. Unlike a centralized database, it may operate without a single authority, using consensus mechanisms (such as Proof of Work or Proof of Stake) to validate and synchronize updates across all participating nodes. For example, a blockchain may be a distributed ledger. A blockchain may refer to a type of distributed ledger that may record transactions in sequentially linked blocks, ensuring data integrity through cryptographic hashing. Each block may contain a set of verified transactions, a timestamp, and a reference to the previous block, forming an immutable chain resistant to tampering. Blockchain networks, such as Bitcoin and Ethereum, may use consensus mechanisms to validate transactions without requiring a central authority.

A trust credential may refer to a digital authentication token or certificate that verifies the identity, integrity, and authorization status of a user, device, or service within a secured environment. It may be issued by a trusted authority and may include cryptographic signatures, blockchain-based attestations, or public key infrastructure (PKI) certificates to prevent tampering or unauthorized access. For example, in a walled garden network, a trust credential stored on a distributed ledger may confirm that a device is authorized to access specific services based on its verified identity. In some examples, the authentication data is compared with the trust credential and if they correspond, authentication may be deemed successful.

In some examples, routing the connection request into the walled garden environment includes isolating the connection request within a logically isolated subnetwork (i.e., the walled garden) established in the core network.

Isolating the request may refer to the process of segregating and analyzing a network access attempt before granting or denying access based on security and policy criteria. This can involve placing the request in a controlled environment, such as a sandbox or quarantine zone, to verify its authenticity, validate credentials, or inspect for potential threats. For example, in a walled garden, a connection request from an untrusted device may be temporarily redirected to an authentication portal before being allowed to access approved services.

In some examples, the method further includes providing, within the logically isolated subnetwork, a dedicated authentication interface for the UE. A dedicated authentication interface may refer to a specialized communication endpoint designed to handle authentication requests between a user, device, or service and the authentication system. It may provide a secure and standardized mechanism, such as an API or protocol-specific interface, for transmitting authentication data, verifying credentials, and enforcing access policies. For example, in a walled garden, a telecom provider may use a dedicated authentication interface to validate credentials before granting access to the external network.

In some examples, the method further includes enforcing a restriction on data communication with external networks until the UE's authentication data has been validated and an access policy for the user equipment has been determined. In other words, only pre-approved services may be allowed until that point.

In some examples, the method further includes instructing, upon successful authentication, (the) at least one external network to grant access to the UE.

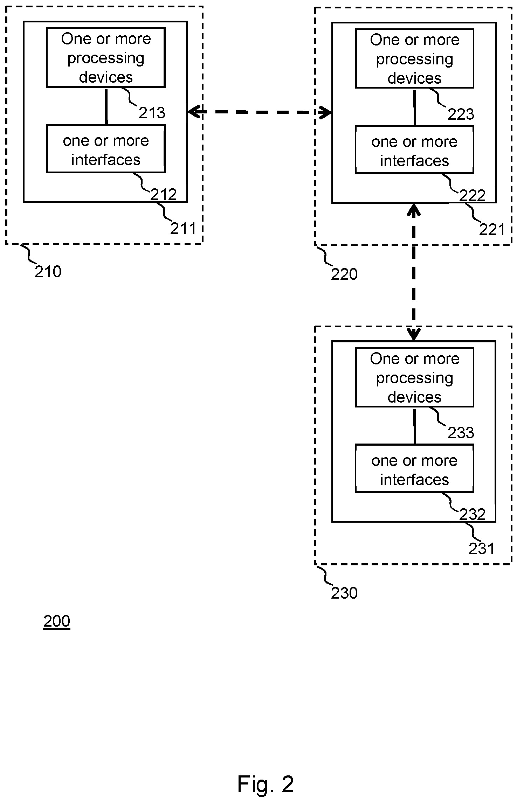

Fig. 2 depicts a telecommunication network 200 according to the present disclosure including a UE 210, a base station 220, and a common core network 230. It should be noted that such a network configuration is only shown for illustrative purposes and the present disclosure should not be understood as limiting in that regard.

The UE 210 of the mobile communication system 200 includes circuitry 211 (also referred to as an apparatus for a UE), e.g. including one or more interfaces 212, which are configured to communicate in the mobile communication system 200. The one or more interfaces 212 are coupled to one or more processing devices (also referred to as processing circuitry in the present disclosure) 213, which may be configured to perform one of the methods described herein.

The processing circuitry 213 is configured to send a connection request to a core network. The connection request may include authentication data for a walled garden environment of the core network (as discussed herein). Thus, the UE may only be allowed to use at least one pre-approved service via the walled garden. The authentication data may be specific for the walled garden environment. For example, the connection request may include appropriate credentials to be compared to stored trust credentials of the distributed ledger, or the like.

In some examples, the processing circuitry 213 is further configured to request, after successful authentication, access to an external network, and subsequently performing bidirectional data communication the external network, as discussed herein.

In some examples, the UE 210 includes first interface circuitry configured to establish a control plane with a common core network for coordinating network resources for the UE. The UE 210 may further include second interface circuitry configured to establish a data plane with an access point of a communications network for coordinating UE data traffic. In such examples, the data plane may be separated from the control plane, as will be discussed further below.

Returning to Fig. 2, the base station 220 of the mobile communication system 200 may include circuitry 221 including one or more interfaces 222, which may be configured to communicate in the mobile communication system 200. The one or more interfaces 222 are coupled to one or more processing devices (or processing circuitry) 223, which may be configured to perform one of the methods described herein. A base station may refer to a network (infrastructure) element that facilitates wireless communication by transmitting and receiving signals between UE and a core network (e.g., via a transport network). It may operate across various technologies, such as cellular networks, Wi-Fi, or satellite systems, and may take different forms, including macro cells, small cells, or dedicated industrial access points, without limiting the present disclosure in that regard. Base stations may serve as intermediaries for data exchange, ensuring connectivity, and enabling seamless mobility for users across different coverage areas.

The processing circuitry 223 of the base station may be configured to receive a connection request from user equipment, UE. The connection request may be based on IP packets generated by the UE. The processing circuitry 223 may be further configured to forward the received IP packets as native IP packets via an IP interface to a common core network, as discussed herein.

The core network 230 of the mobile communication system 200 may include circuitry 231 including one or more interfaces 232, which may be configured to communicate in the mobile communication system 200. The one or more interfaces 232 may be coupled to one or more processing devices (or processing circuitry) 233, which may be configured to perform one of the methods described herein.

The core network 230 may be configured to carry out any one of the methods discussed above. The core network 230 may include a walled garden environment including a logically isolated subnetwork within the core network (as discussed above) that includes a dedicated authentication interface (as discussed above) and policy enforcement circuitry. The policy enforcement circuitry may be configured to enforce the determined access policy (e.g., to grant or deny access or to grant restricted access).

The circuitry 231 (or apparatus for a core network) includes the processing circuitry 232 configured to provide a logically isolated subnetwork configured to segregate connection requests from UE from the remainder of the core network, as discussed above. The processing circuitry 232 may be further configured to receive authentication data from the UE, restrict data communication with external networks until the received authentication data is validated, and communicate with a core network controller for updating access policies based on the authentication data, as discussed herein.

As illustrated in Fig. 2, the respective one or more processing devices (or circuitry) 213, 223, and 233 are coupled to the respective one or more interfaces 212, 222, and 232, but the connection depicted in Fig. 2 should be not understood as limiting. The one or more interfaces 212, 222, and 232 may correspond to one or more inputs and/or outputs for receiving and/or transmitting information, which may be in digital (bit) values according to a specified code or protocol, within a module, between modules or between modules of different entities. For example, an interface 212, 222, and/or 232 may comprise interface circuitry configured to receive and/or transmit information/data. In examples, an interface 212, 222, 232 may correspond to any means for obtaining, receiving, transmitting or providing analog or digital signals or information, e.g., any connector, contact, pin, register, input port, output port, conductor, lane, etc., which allows providing or obtaining a signal or information. An interface 212, 222, 232 may be configured to communicate (transmit, receive, or both) in a wireless or wireline manner and it may be configured to communicate, i.e., transmit and/or receive signals, information with further internal or external components. The one or more interfaces 212, 222, 232 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices (or processing circuitry) 213, 223, 233 may be implemented using one or more processing units, one or more circuitries, any means for processing, such as one or more processors, one or more computers, one or more programmable hardware components being operable with accordingly adapted software. In other words, the described function of the one or more processing devices 213, 223, 233 may as well be implemented in software, which may then executed on one or more programmable hardware components. Such hardware components may comprise a general-purpose processor, a Digital Signal Processor (DSP), a micro-controller, a computer, a processor, a control unit, a (field) programmable logic array ((F)PLA), a (field) programmable gate array ((F)PGA), a graphics processing unit (GPU), a central processing unit (CPU), a neural processing unit (NPU), an application-specific integrated circuit (ASIC), an integrated circuit (IC), a system-on-a-chip (SoC) system, or the like.

A network/access entity/node according to the present disclosure, may be located in the fixed or stationary part of the network or system. A network entity may correspond to a remote radio head, a transmission point, an access point, a macro cell, a small cell, a micro cell, a pico cell, a femto cell, a metro cell or the like. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals in line with one or more of the above listed systems..

The mobile communication system 200 may be at least partially cellular. The term cell may refer to a coverage area of radio services provided by a transmission point, a remote unit, a remote head, a remote radio head, communication device, network entity, or the like. The terms cell and base station may be used synonymously, a base station may generate multiple (at least one) cells. A wireless communication device, can be registered or associated with at least one cell (e.g., the network entity), e.g., it can be associated to a cell such that data can be exchanged between the network and the mobile in the coverage area of the associated cell using a dedicated channel, connection or link.

In general, different technologies for communicating IP packets may be used and the present disclosure is not limited to a particular technology. For example, different types of access nodes may require different technologies, such as Orthogonal Frequency Division Multiple Access (OFDMA), a Time Division Multiple Access (TDMA), a Code Division Multiple Access (CDMA), a Wideband-CDMA (WCDMA), a Frequency Division Multiple Access (FDMA), a Spatial Division Multiple Access (SDMA) network, or the like.

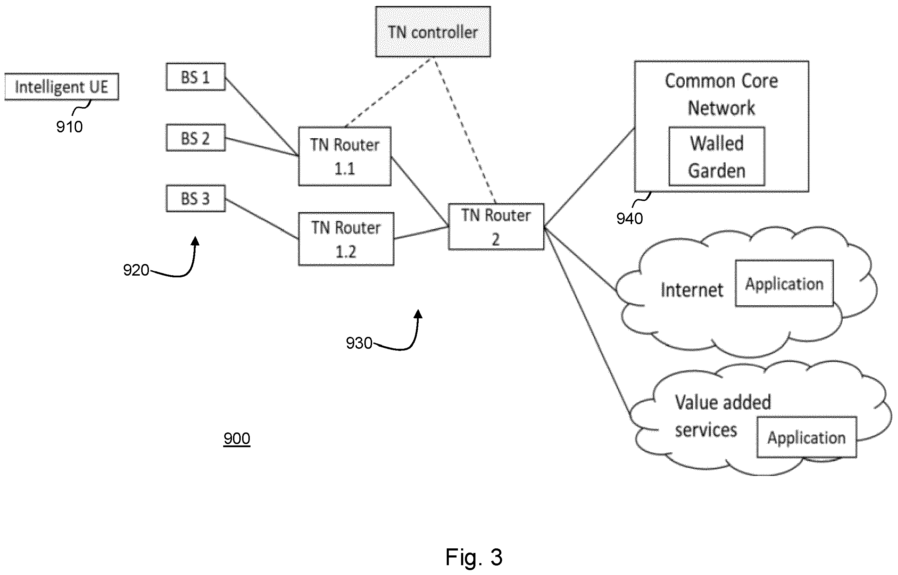

Fig. 3 depicts a diagram of a communication network 900 according to the present disclosure to describe the interworking of the different elements to grant access of the UE to the external network, i.e. of a UE 910, base stations 920, a transport network 930, and a common core 940 (with a walled garden).

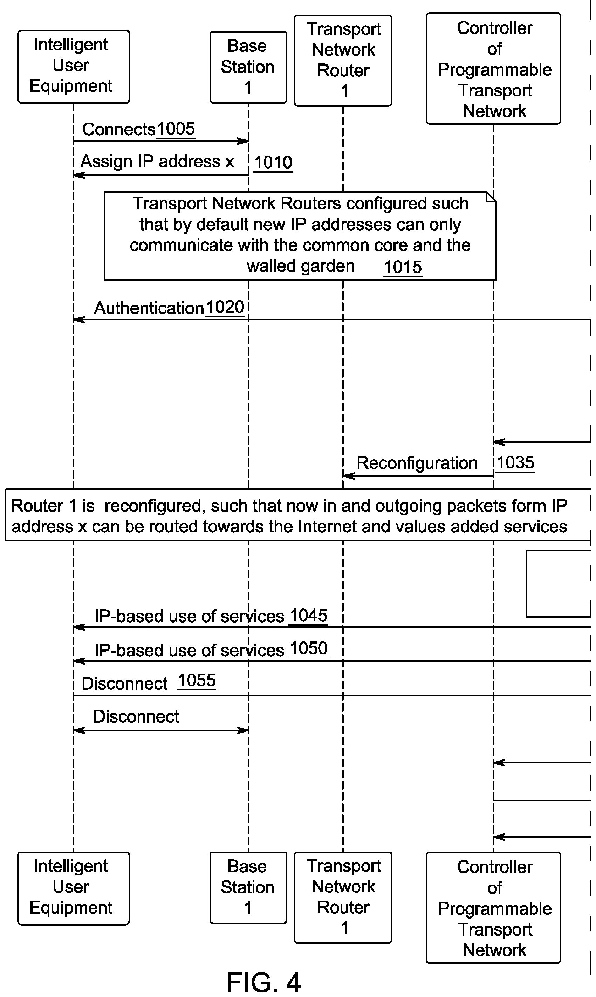

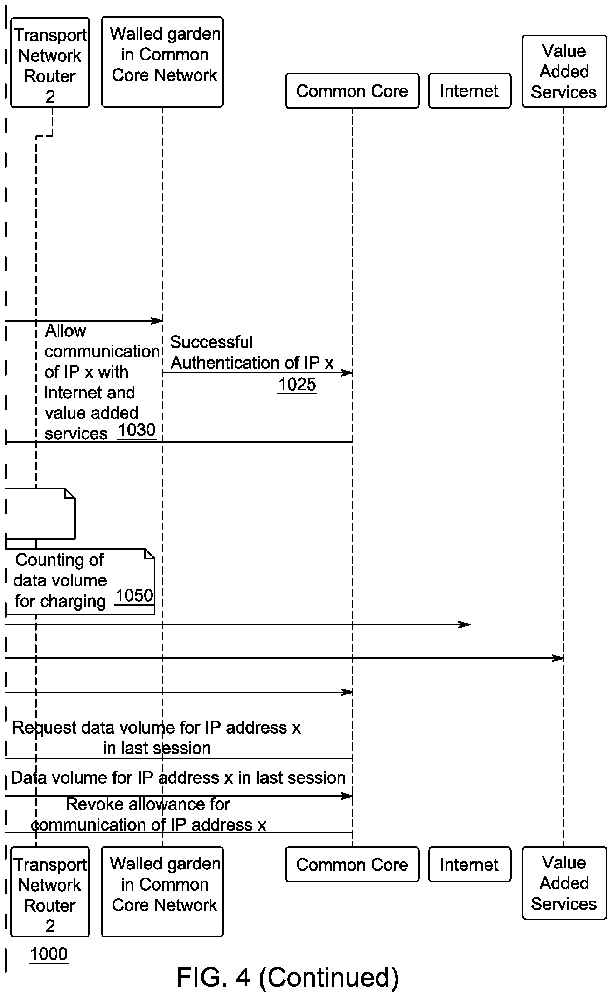

An exemplary method 1000 of establishing a connection is given in the following under reference of a sequence diagram of Fig. 4. As an example, it is further referred to the network of Fig. 3, but the present disclosure is not limited in that regard.

In the method 1000, the UE 910 may connect, 1005, to a Base Station 1 (BS1), which assigns, 1010, an IP address x to the UE 910. As indicated above, any access technology may be used (instead of a base station) that adopts the plain IP principle.

The transport network 930 may be configured, 1015, to allow new IP addresses to communicate only with the common core 940 and the walled garden by default.

The UE 910 may connect with the Walled Garden and authenticate, 1020. Authentication may happen via any protocol (or multiple protocols), such as EAP (Extensible Authentication Protocol). EAP may refer to a flexible authentication framework that may be used in wireless networks and point-to-point connections, supporting various authentication methods such as password-based, certificate-based, and token-based methods. Upon successful authentication, 1025, the common core 940 may instruct, 1030, a controller of the transport network 930 to allow communication of IP x with the Internet and value-added services (external network).

The controller of the transport network 930 may then reconfigure, 1035, router 1.1 to enable routing of packets from IP x to the external network. Router 2 of the transport network 930 may count, 1040, the data volume for charging purposes.

The UE 910 may use IP-based services from the Internet, 1045, and value-added services, 1050. Upon disconnection, 1055, the common core 940 may request data volume for IP x from the last session from the Transport Network Controller and uses that information for accounting / charging, as well as instruct the Transport Network Controller to revoke allowance for communication of IP x, as already discussed above.

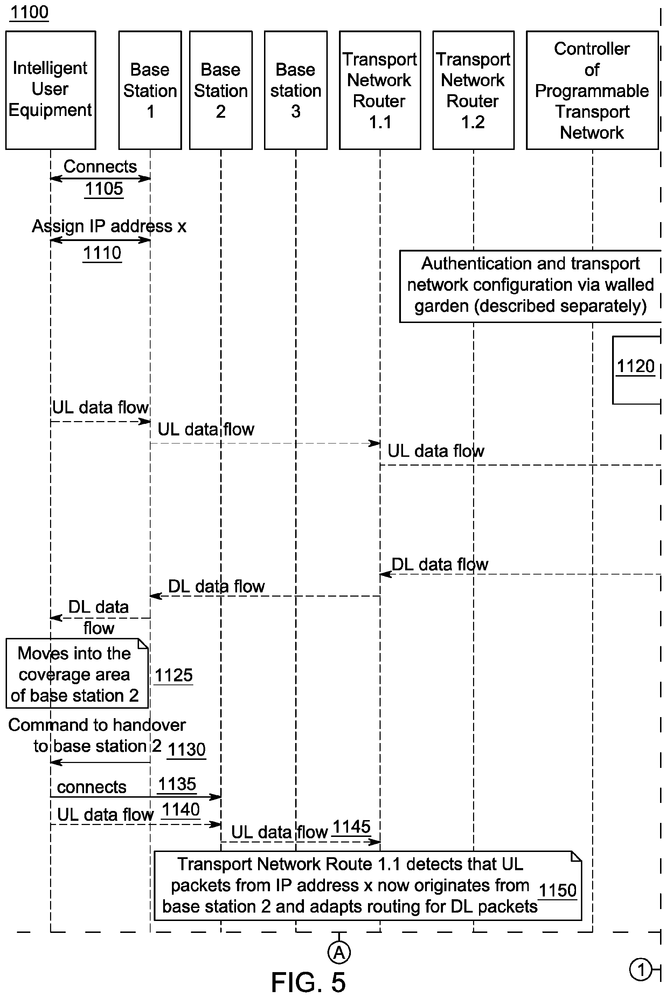

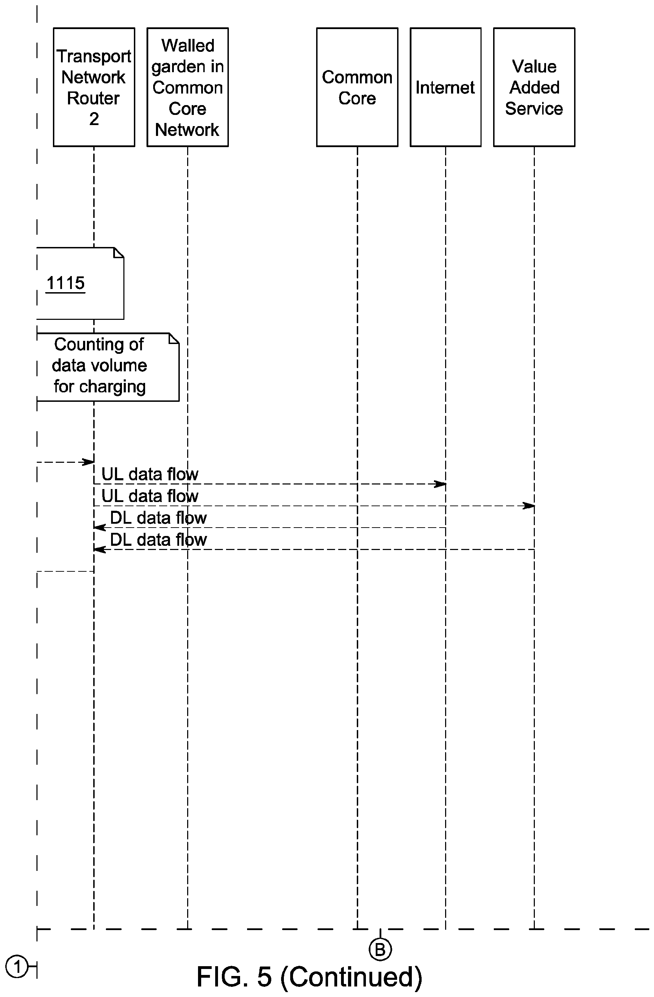

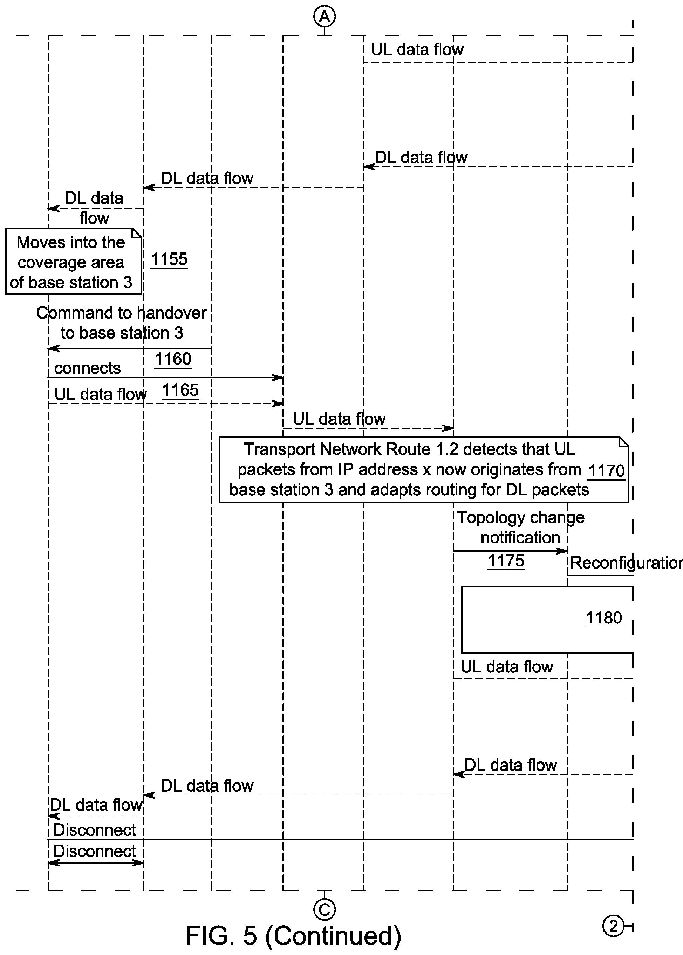

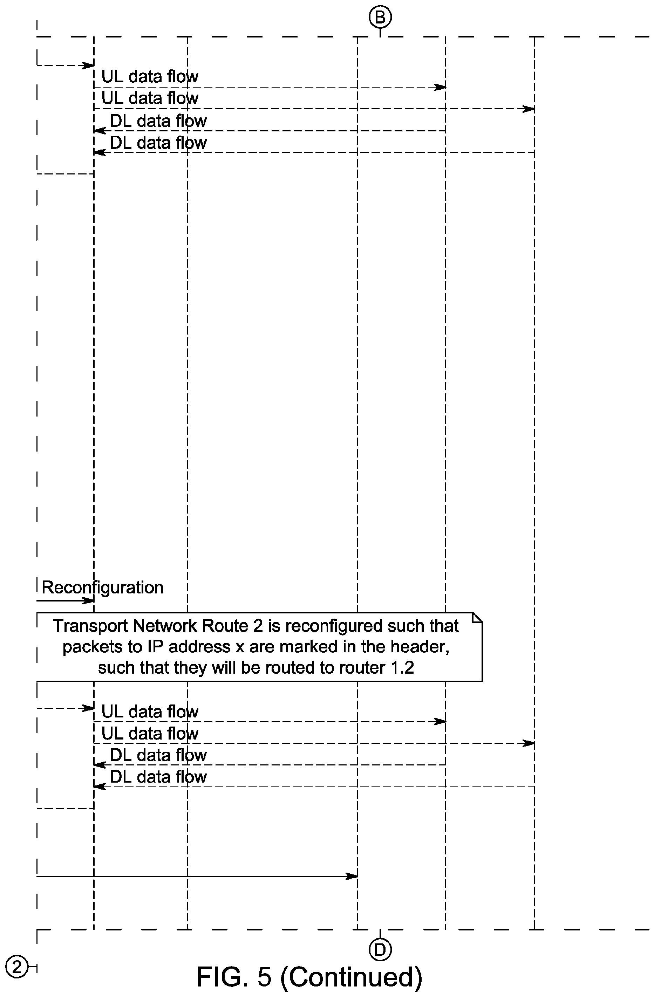

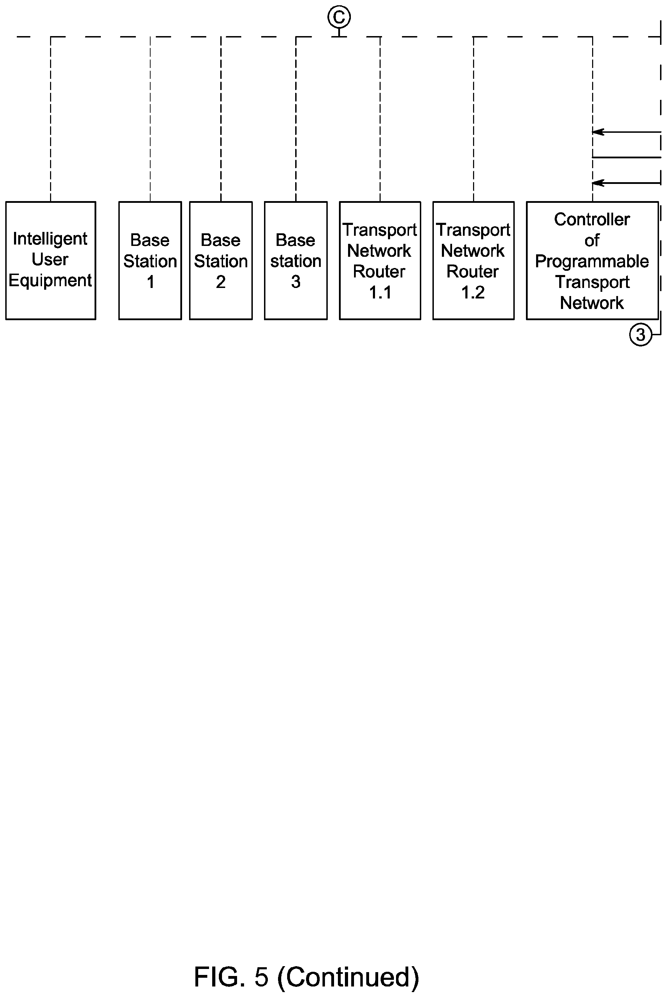

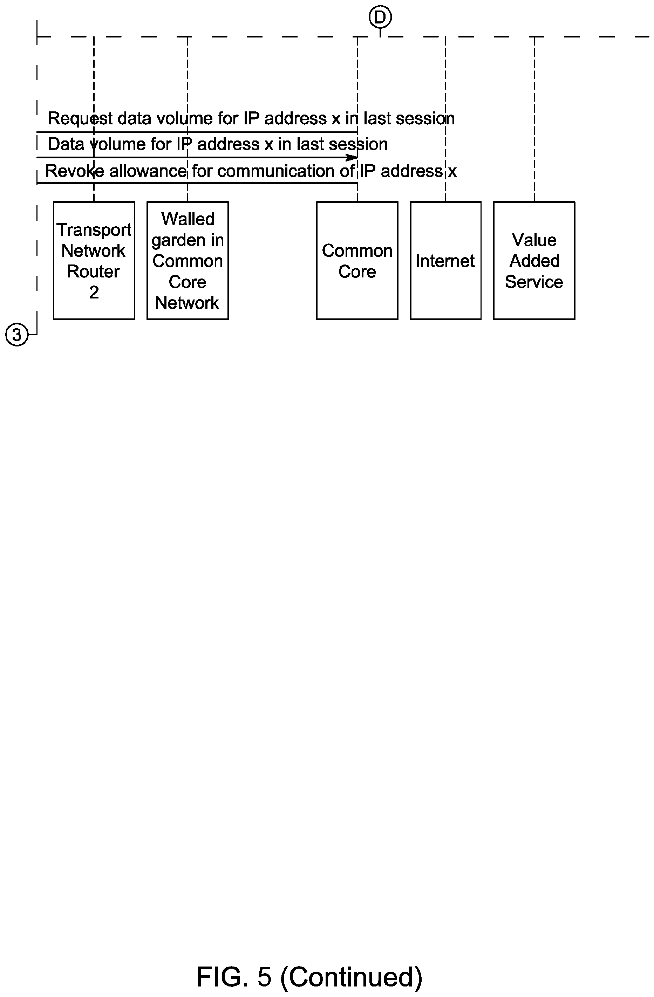

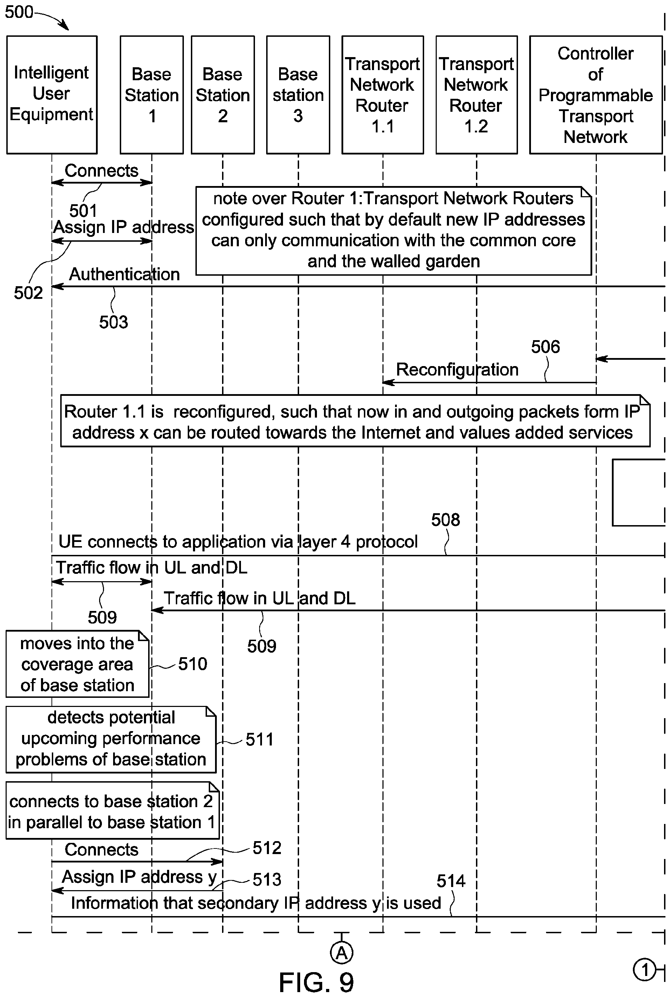

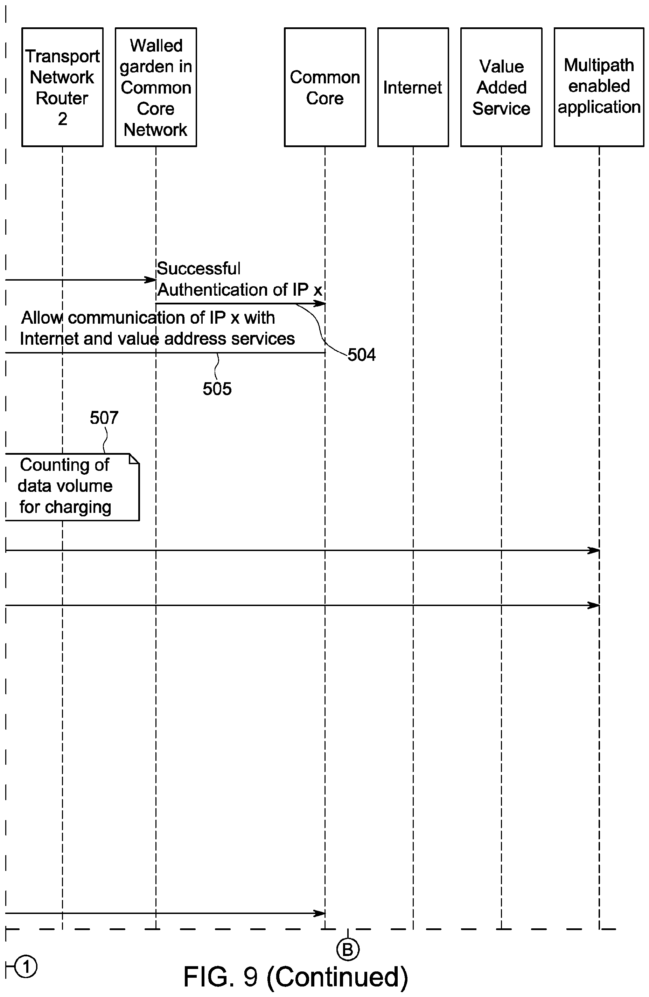

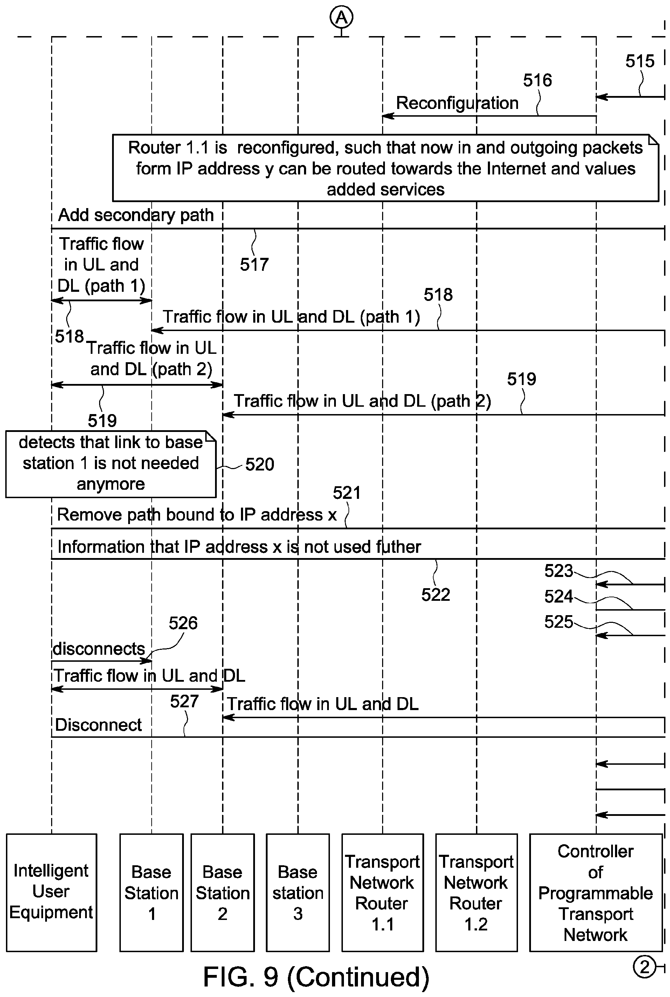

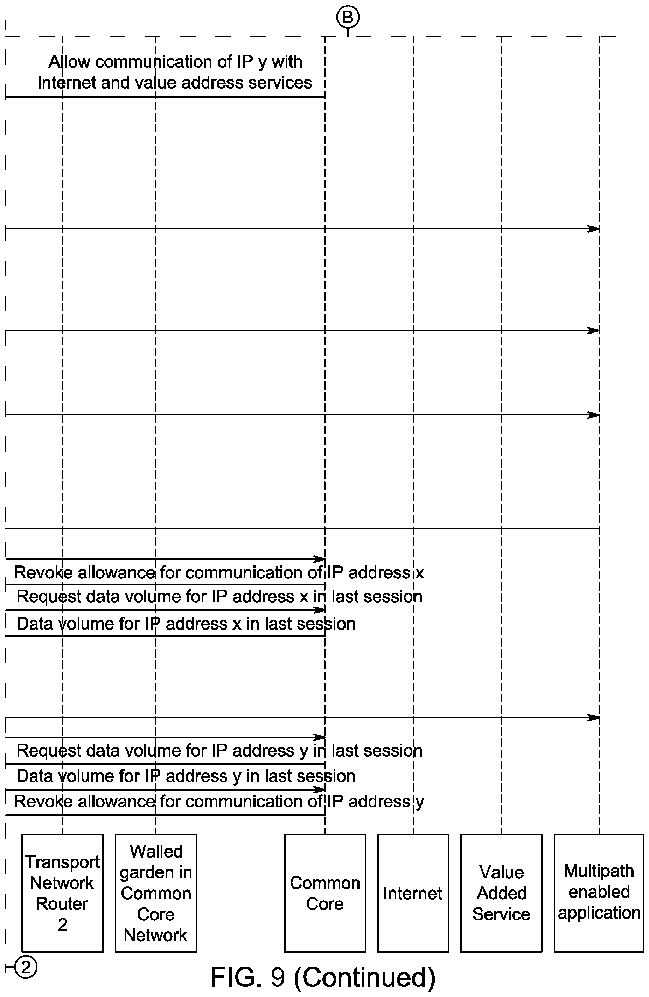

Fig. 5 depicts a sequence diagram of a method 1100 for providing mobility with a network according to the present disclosure, such as the network of Fig. 9 (without limiting the present disclosure in that regard). In the following, only the most relevant steps are discussed. However, still, any step may be considered optional. This approach may be used alternatively or complementary to the approach described under reference of Fig. 5.

At 1105, the UE 910 may connect to BS1, which may assign, 1110, an IP address x to the IUE. Authentication and transport network configuration, 1115, may take place as previously described. Router 2 may count, 1120, the data volume for charging purposes.

Data may flow from/to the UE 910 and the external network via BS1, Router 1.1 and Router 2.

When the UE 910 moves, 1125, into the coverage area of BS2, a handover may be required. Handover may be triggered, 1130, by the network (potentially supported by the UE 910 providing measurement reports about the available base stations and the corresponding signal strength). Alternatively, the UE 910 may initiate a handover itself.

To do so, the UE 910 may connect, 1135, to BS2 and send, 1140, UL data, which may be forwarded, 1145, to Router 1.1. Router 1.1 may detect, 1150, that packets from UL are now arriving via BS2 and adapt routing for DL packets accordingly.

When the UE 910 moves, 1155, into the coverage area of BS3, another handover may take place. The IUE may connect, 1160, to BS3 and send, 1165, UL data, which may be forwarded to Router 1.2 instead of Router 1.1, as BS3 is connected to Router 1.2.

Router 1.2 may detect, 1170 that packets from a previously unknown IP address arrive and may notify, 1175, the Transport Network Controller of the topology change.

The Transport Network Controller may reconfigure, 1180, the transport network 930 such that also DL packets may be transferred via the right path to the UE 910. For that purpose, the headers of packets to the UE 910 may be configured such that source/segment routing towards Router 1.2 is performed in the following. In case there are additional routers in-between Router 2 and Router 1.2, this header information may be used by all in-between routers to transfer the packet to the correct destination.

In the following, merely as examples, an application of the principles is discussed, but the present disclosure is not limited in that regard as walled garden authentication may be applied to any (known) network. Some aspects or features discussed in the following may be taken in isolation and combined with aspects or features pertaining to the walled garden principles discussed above.

Some examples pertain to a method for establishing a connection between UE and a common core network via at least one base station of a mobile communications network.

The UE may communicate with the base station based on wireless (or partially wired) communication. According to the present disclosure, a "plain IP" or "native IP" (IP: Internet protocol - "native" and "plain" may be used interchangeably herein) communication may be adopted throughout whole network. While in previous approaches, IP packets were sent from the UE to the base station, the base station altered these IP packets, e.g., based on encapsulation and transport protocols. For example, in the context of 5G, a UE communicating with a gNodeB (next generation node B) may use a data radio bearer (DRB) channel. However, the data received by the gNodeB may be encapsulated based on GTP (GPRS tunneling protocol) by adding a GTP header for transporting it to the core network. Thereby, user planes and control planes may be separated. However, according to the present disclosure, no encapsulation of IP packets may be carried out by the base station.

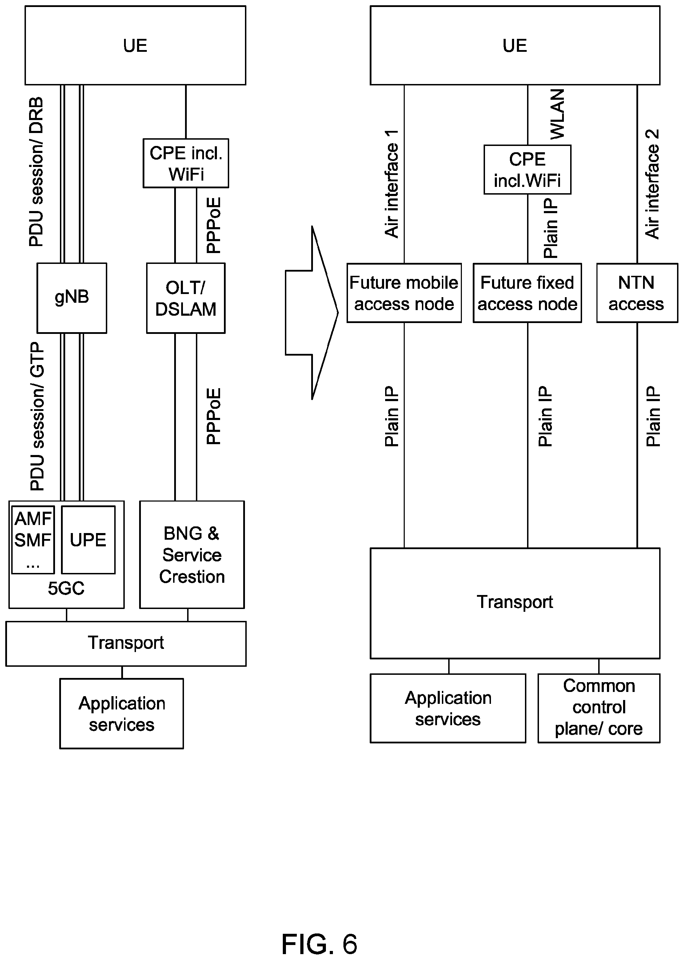

Plain IP access may represent a significant shift from traditional network architectures. This concept may involve terminating plain IP at access nodes, enabling more direct and streamlined communication between UE and the core network. By eliminating the extensive use of tunneling, plain IP access may simplify the network, reducing latency and improving overall performance. Fig. 6 depicts this change from a traditional network to an exemplary network according to the present disclosure. The left side of Fig. 6 depicts today's situation in which networks may be IP-based but make extensive use of tunnelling. In mobile networks, traffic may be exchanged via the core network (as 5G core network - 5GC in Fig. 6), via GTP and in fixed networks via PPP over Ethernet (PPPoE) to the Broadband Network Gateway (BNG). The 5GC and the BNG may provide connectivity to the Internet and other networks.

According to the present disclosure, such telecommunication-specific protocols and core networks may be replaced. The right side of Fig. 6 depicts the "plain IP" interface between the different access networks and a common control plane/common core that may be independent of an access technology (or, in other words, the common core network may be agnostic with respect to an access technology). In more general terms, a common core may be configured to communicate based on an IP communication protocol with an access node, thereby being agnostic to the access technology, and thereby not being specific for cellular/mobile telecommunications. Instead, also other access technologies may communicate with the common core, such as satellite communication, Wi-Fi (or WLAN)-based communication, DSL, or the like.

In other words, plain IP may enable a unification of the control plane via IP, regardless of the underlying layer 1 or layer 2 technology. This unified control plane may facilitate seamless integration of various access technologies, providing a more cohesive and flexible network structure. Such a setup might not only enhance energy efficiency by reducing the number of active components, but also lowers operational costs through simplified network management. The interface between access node and the UE may be any interface that supports IP based communication.

As mentioned above, the use of plain IP may be associated with a significant change of network principles as legacy protocols may be used for providing important functionality such as support for mobility and quality of service. How such functionality will be provided in a plain IP network may be described below. Additionally, plain IP access may support a diverse vendor ecosystem by adhering to common IT standards (e.g., standard IP-based protocols and technologies) and open-source solutions by reusing as many commonalities in different access technologies as possible. This openness may encourage innovation, foster competition among vendors, and diminish reliance on proprietary systems. The result may be a more adaptable network that can quickly incorporate new technologies and services, ensuring that the infrastructure remains robust and future-proof.

One of the most transformative aspects of plain IP access may be its ability to eliminate the need for traditional user plane processing functions such as User Plane Functions (UPF) and Packet Gateways (PGW). By shifting to a plain IP approach, the network architecture may be simplified significantly. This streamlining may allow user data traffic to be processed more directly at the access nodes without intermediate processing stages that were essential in traditional network setups. For example, functions that were previously located in the transport network or core network may at least partially be moved to the access node, thereby reducing infrastructure. The absence of these traditional functions may reduce complexity and minimize latency, enabling faster and more efficient data transmission. This reduction in processing stages might not only enhance performance but also lead to substantial cost savings in terms of infrastructure and maintenance. With fewer components and layers involved, the network may become more agile and easier to manage, further aligning with the principles of energy efficiency and cost reduction.

In essence, the plain IP approach may modernize the network by leveraging the simplicity and universality of IP protocols, creating a more cohesive and adaptable ecosystem that may seamlessly integrate with diverse access technologies and evolve with future advancements.

One principle of the present disclosure may be to maintain simplicity in the access part of the network. Simplifying the access layer may be crucial for scalability, as it may reduce complexity and operational overhead associated with managing a vast number of access nodes.

As mentioned above, the core network that is used according to the present disclosure, may be referred to as a "common" core network, i.e., a core network that is independent of an access technology and is thus, common for different access technologies (i.e., other than cellular mobile communication, but also for wired communication (e.g., fixed access), satellite communication (e.g., NTN access), or the like).

For example, after having registered via a plain IP access site, all traffic from the user equipment may be (initially) routed to the common core (that may host the walled garden, without limiting the present disclosure in that regard, i.e. a controlled environment where the service provider may tightly regulate access to content and services, as discussed herein). The common core may expose an API (application programming interface) towards the UE and a portal via which the user equipment may authenticate. The authentication and authorization process may be backed by a distributed trust ledger, e.g. leveraging blockchain technologies for self-sovereign-identities, in some examples. After successful authentication, the (programmable) transport network (which will be discussed further below) may be instructed to enable routing of packets from/to the UE. For example, segment routing v6 (SRv6) may be applied for the transport network. In such a case, the common core network may update SRv6 routing policies of SRv6 edge nodes correspondingly. For example, if the default case is defined as the IP packets must first arrive at the common core/walled garden, no initial routing may be adopted and then, after authentication, routing to the external network may be applied. However, the present disclosure is not limited in that regard. For example, if no authentication has happened, a routing indication to the common core/walled garden may be applied first, and then, the default case may be communication with the external network, such that no routing indication may be adopted. In other examples, a routing indication may always be present, i.e., before and after authentication.

The core network may host the walled garden, as discussed above, e.g., with control plane managing. It may facilitate federating resources of the network operator and 3rd party services and resources. Any user equipment connected to the access networks may first authenticate with the walled garden and then request services. The control plane (common core) may, e.g., based on the requested customer's intent (discussed below), dynamically determine the optimal configuration of all needed services and resources.

An access network may refer to the part of a telecommunications network that connects end-user devices to the core network, enabling communication and data exchange. It may be based on various technologies such as fiber optics, DSL, cellular networks, and Wi-Fi to provide connectivity.

An access point may refer to a device that allows wireless devices to connect to a wired network. It may act as a bridge between wireless clients and the network infrastructure, extending coverage and improving connectivity.

The method mentioned above may include receiving, at the base station, a connection request from the UE. The connection request may be based on IP packets generated by the UE, as discussed above. A connection request may refer to a signaling message sent by the UE to the base station to initiate establishment of a communication link for transmitting data or signaling in the network. An IP packet may refer to a (structured) data unit that carries user or control data across the (IP) network, (e.g., including a header containing routing information) and a payload with the transmitted data. However, the present disclosure is not limited to the case that the header necessarily includes routing information. For example, for establishing the connection, the header may be a dedicated header that indicates the intent of establishing the connection, such that the base station may automatically route the IP packets to the common core network for authentication (e.g., per default, but as discussed above, this may be implemented differently). It should be noted that, in some examples, before the UE sends an IP packet, a layer 1 and 2 connection may be established.

The method may further include forwarding, by the base station, the received IP packets as native IP packets (or plain IP packets, as discussed above) via an IP interface to the common core network. As discussed above, the IP interface may be any interface that is capable of IP communication. For example, the base station may be connected via fiber optics, using a wide area network (WAN) interface. In other examples, the base station may be connected via a microwave link. As also discussed above, the forwarding of native IP packets may include that the original header (format) of the IP packets may be preserved and in particular, no encapsulation may be applied. Instead, the IP packets may be forwarded as they are. However, in some examples, the header may be altered after authentication, e.g. based on an IPv6 indication included in the header. As discussed above, there may be different default cases. If the default case is that packets are first sent to the common core network, no changing of the header may be necessary until after authentication when they are rerouted to the external network. However, the default case may be that communication with the external network should not need rerouting. In such a case, before authentication, the header may be changed. It should be noted that, in some examples, no default case may be defined such that changing of the header may always be necessary.

The method may further include enabling, via the common core network, bidirectional IP data communication between the UE and an external network based on an established IP session.

In some examples, the native IP packets are IPv6 packets. In such examples, the bidirectional IP data communication may be based on a hierarchical IPv6 routing protocol to aggregate IPv6 prefixes associated with individual access points, thereby reducing routing table complexity. A hierarchical structure may involve multiple levels of organization, such that the routing protocol may manage routing of data more effectively. By aggregating IPv6 prefixes (i.e., combining multiple IP address ranges into broader groups), the protocol may reduce the number of individual routes that need to be handled. These prefixes may be associated with individual access points, i.e., each access point may have its own allocated address range. By organizing and aggregating these prefixes, the network may reduce routing table complexity, meaning routers may have fewer entries to process, leading to improved performance and scalability.

Thereby, different levels of mobility may be supported, for instance by having the possibility to configure a terminal with multiple IPv6 addresses, each with a distinct level of persistency and mobility support. The present disclosure may leverage inherent flexibility of IPv6 to enhance the efficiency and effectiveness of mobility management. In such an example, each IPv6 address assigned to the UE may be designed to support a different level of mobility. For example, one address may be highly persistent, ensuring seamless connectivity and minimal disruption during handovers, making it usable for real-time applications such as VoIP or video conferencing. Another address may have a lower level of persistency, suitable for applications that may tolerate brief interruptions, such as web browsing or e-mail.

By selecting the appropriate IPv6 address for communication with application servers, both the terminal and the application may dynamically choose the necessary level of mobility support from the network. This selection may be based on the specific requirements of the application, the current mobility state of the terminal, or network conditions. For instance, a terminal engaged in a real-time video call may use the highly persistent address to maintain continuous connectivity, while a file download may use a less persistent address to optimize resource usage.

Such an approach might not only optimize network resource allocation but also enhance user experience by ensuring that each application receives the appropriate level of mobility support. It may reduce signaling overhead associated with maintaining seamless connectivity for all services, thereby improving overall network performance.

To ensure the effectiveness of this approach, operators may find ways to incentivize the use of the appropriate mobility support level for different applications. Without proper incentives, there may be a risk that applications might always opt for the highest level of mobility support, even when it is not necessary for the service being used. This might lead to an inefficient allocation of network resources, increasing the signaling overhead and potentially degrading overall network performance. Operators may implement various strategies to encourage the use of the suitable mobility support level. For instance, they may design pricing models that reflect the different levels of mobility support, charging lower fees for services that use less persistent addresses.

To further optimize network performance, the present disclosure may consider capabilities of individual devices when determining the appropriate level of mobility support available to each terminal. For example, Fixed Wireless Access (FWA) terminals, which typically remain stationary or exhibit very limited mobility, may not require high persistency addresses. In such scenarios, assigning only low persistency IPv6 addresses to FWA terminals may ensure that network resources are utilized efficiently without unnecessary overhead. Conversely, for devices that demand seamless mobility, such as smartphones or tablets used for real-time applications like VoIP or video conferencing, both high and low persistency addresses may be assigned. This may allow the terminal to dynamically select the IPv6 address that matches the mobility requirements of the current application and network conditions. To achieve this, the persistency level may be encoded directly within the structure of the IPv6 address itself. For example, by designating specific bits within the address to represent different levels of mobility persistency, the network may easily identify and manage varying degrees of mobility support required by different applications and devices. For instance, an IPv6 address may include a dedicated segment where certain bit patterns correspond to high persistency, ensuring seamless connectivity, while other bit patterns indicate low persistency, suitable for applications that can accommodate brief interruptions. Such an encoding may allow for a straightforward and efficient method to dynamically allocate appropriate resources based on the terminal's needs and the application's sensitivity to mobility disruptions. Moreover, this approach may facilitate packet treatment in the network according to the persistency level.

For the hierarchical approach mentioned above, the following may be considered:
- Global Unicast Addressing may be adopted: At the top layer, IPv6 global unicast addresses may be used to identify networks uniquely across the globe.
- Subnetting may be adopted: Below the global unicast addressing, the network may be divided into subnets. Each subnet may be identified by a subnet prefix, which may be a combination of the global prefix and additional bits that specify the subnet. This may allow for logical and efficient segmentation of the network into smaller, manageable sections. Hierarchical Routing may be adopted: Routing within a hierarchical IPv6 network may be optimized through aggregation, as discussed above. Subnet prefixes may be aggregated to reduce the size of the routing tables, enabling faster and more efficient routing. Routers at each level of the hierarchy may use these aggregated prefixes to forward packets to the appropriate subnet without needing detailed information about every individual address.

Address Allocation may be adopted: Within each subnet, IPv6 addresses may be allocated to devices using Stateless Address Autoconfiguration (SLAAC) or Dynamic Host Configuration Protocol for IPv6 (DHCPv6). For example, each terminal may be assigned with several IP addresses, as discussed above, each with a different level of mobility support.

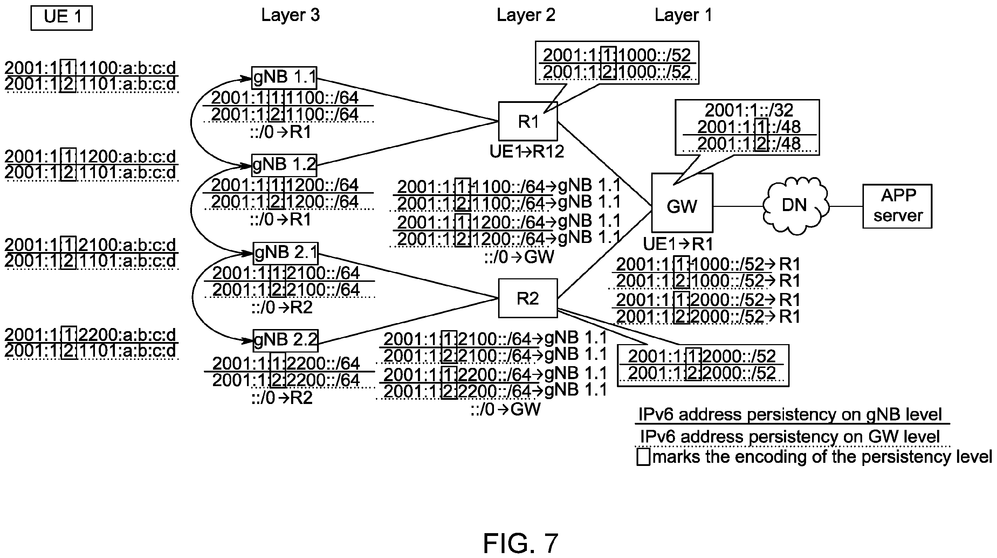

Fig. 7 shows an example of the implementation in a hierarchical routing topology. The telecommunication system comprises a cellular mobile communication system, with gNBs as access nodes and a gateway GW to a data network DN.

Two persistency cases are considered:
(1) IPv6 address persistency at gNB level (solid underlining), and
(2) IPv6 address persistency at GW level (dotted underlining).

The encoding of the persistency level is marked by the boxes in the addresses in Fig. 7. The example considers three hierarchical layers, named as Layer 3 (gNBs 1.1, 1.2, 2.1, 2.2, access nodes), Layer 2 (routers R1, R2), and Layer 1 (Gateway GW). Fig. 7 shows a UE (UE1) on the left that uses a service of an application server (APP server), which is shown on the right. The application server connects to a data network (DN) or network cloud. Access to the UE is provided via gateway GW and via Layers 1, 2, and 3.

Layer 1 represents the topmost layer in the hierarchy and is responsible for the global unicast address assigned to the entire network. This layer uniquely identifies the network across the globe. For example, the global unicast address for the network could be: 2001:1::/32, This address serves as the global prefix for the entire organization's network. This global unicast address is divided in two subnets. One subnet for each persistency case called the persistency subnets:
- Low persistency subnet: 2001:1:1::/48
- High persistency subnet: 2001:1:2::/48

Layer 2 involves dividing the persistency subnets into subnets per router (R1, R2). Each router in layer 2 is assigned a unique subnet prefix, which is derived from the respective persistency subnet with additional bits to specify the region. For the two routers in Layer 2, the following subnets are applied:
- Router 1 (R 1): 2001:1:1:1000::/52 and 2001:1:2:1000::/52
- Router 2 (R 2): 2001:1:1:2000::/52 and 2001:1:2:2000::/52

Layer 3 is the lowest layer in the hierarchy and is responsible for assigning IPv6 addresses to individual devices within each local subnet. Therefore, the gNBs in this layer are configured each with an own subnet and each UE within a local subnet receives an IPv6 address, ensuring unique identification and communication capabilities. Each device will be configured with an IPv6 address for each persistency case:
- UE 1 connected to gNB 1.1:
   ∘ 2001:1:1:1100:a:b:c:d low persistency address
   ∘ 2001:1:2:1100:a:b:c:d high persistency address

From Fig. 7 it can be seen when UE 1 handovers between the gNBs that its low persistent IPv6 address (solid underlining) is changing while the high persistent IPv6 address (dotted underlining) stays the same. For the high persistent case the UE gets an IPv6 address from the gNB to which the initial connection happened (gNB 1.1 in the above example). This IP address stays the same during all handovers.

It is essential to detect handovers of the UE and to change the routing tables in the transport network such that the packets can be correctly routed to/from the UE. An example of host specific routing entries is shown in the example for UE 1, which initially attached to gNB 1.1 and afterwards handovered to gNB 1.2.

The network architecture may intelligently distinguish between low persistency and high persistency IP addresses. When a UE handover occurs between gNBs, the system evaluates which IP addresses require updates in the transport network's routing tables. Specifically, it identifies that only the high persistency IPv6 addresses necessitate routing adjustments. In this case the routing tables (in Layer 2 and/or Layer 3) of the telecommunication system may be updated for mobile devices (UE) traversing access nodes (gNBs) of the telecommunication system. The UE may then keep its IPv6 address when handing over between gNBs. The routing tables are updated more often for addresses of the second group (high persistency) than for addresses of the first group (low persistency). Conversely, the low persistency IPv6 addresses, which change between handovers, do not require such updates. In this case, addresses may be re-assigned for mobile devices (UE) traversing access nodes of the telecommunication system. The addresses from the first group (low persistency) are re-assigned more often than addresses of the second group (high persistency).

Please note that these routing table updates are only done in case that the persistent IP address is part of an active connection. This selective update mechanism reduces or even minimizes signaling overhead.

Fig. 7 illustrates an example in a mobile communication system. However, in further examples the telecommunication system may further comprise a wired network with Wireless Local Area Network, WLAN, access node. In such a case, the second address may be maintained when the mobile device changes between a WLAN access node and an access node of the mobile communication system. That way, the second address group may have address persistency across multiple access technologies. Hence, in the hierarchy there is a layer covering multiple access technologies and routing table updates may be carried out at a routing entity that has capability of routing the packets to access nodes of different access technologies.

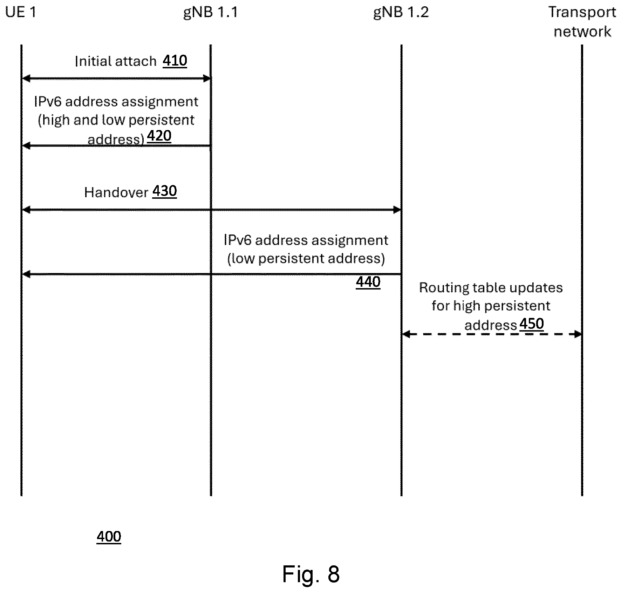

Fig. 8 depicts a sequence diagram 400 of a method for assigning IP addresses with different persistency and a handover that is carried out based on the different IP addresses. Initially, when a UE attaches, 410, to gNB 1.1 (wherein the present disclosure is not limited to an access technology and gNB is just an example), it receives, 420, both a low persistency IPv6 address and a high persistency IPv6 address. Upon handover, 430, from gNB 1.1 to gNB 1.2, the UE's low persistency address changes, 440, while the high persistency address remains constant, as it is tied to the initial gNB connection. However, routing within the transport network is adapted, 450, and host routing entries are added for the high persistent address of the UE in case it is part of an active connection. It should be noted that there may be multiple cases how the mobility of the UE is handled. For example, if it is determined that the UE moves below a predetermined threshold (e.g., since it remains in the same cell), it may only receive a low persistency IP. On the other hand, if the UE moves above a predetermined (second) threshold, it may only get a high persistency IP. Depending on movement/mobility characteristics of the UE, the UE might also get a low persistency IP for a first amount of time (e.g., during a first time of the day) and a high persistency IP for a second amount of time (e.g., during a second time of the day). For example, if the user commutes each day for a certain amount of time (e.g., one hour or two hours), it may be determined that during this time period, they may only need the high persistency IP while, when the user is at their workplace, it may be determined that they may only need the low persistency IP during that time period.

A mechanism within the UE may selectively choose the appropriate IP address based on handover support. Such as mechanism may ensure seamless connectivity and service continuity. By dynamically selecting the correct IP address (either low persistency or high persistency, without limiting the present disclosure only to two levels of persistency) based on the network's handover capability, the UE may maintain ongoing sessions without interruptions. This may be applied for real-time applications such as VoIP calls, video streaming, online gaming, and the like, where even a brief connectivity loss can lead to poor user experience. Secondly, it may optimize network resource utilization. When the UE intelligently selects the IP address, it may reduce unnecessary signaling and routing table updates. This selective approach may minimizes the overhead on the transport network, thereby enhancing overall network efficiency and performance. Consequently, the network may manage more connections and handovers with the same resources, leading to better scalability and reliability.

In some examples, segment routing may be used. If IPv6 is applied, segment routing IPv6 (SRv6) may be enabled for an underlying transport network. For example, a programmable transport network may be used, such as an SRv6 transport network (without limiting the present disclosure in that regard).

In some examples, the method further includes inserting a segment routing indication into the native IP packets for applying segment routing of the IP packets. The segment routing indication may refer to any change of the packet that allows the packet to follow a predefined path through a sequence of segments without relying on traditional hop-by-hop routing tables, such as changing a header of the IP packets, but there may be other ways, too. In the example discussed above, segment routing may be used for routing IP packets to gNB 1.2 after handover. Also, other applications of segment routing may be envisaged, such as in response to a change in network topology. Hence, in some examples, the method further includes reconfiguring the segment routing indication in response to a change in network topology to dynamically adjust the routing path of subsequent native IP packets from the base station to a different access point. Handover to a different base station may be encompassed from this example, but also to an access point of a different access technology, such as a Wi-Fi router. Hence, access point may be any network entity capable of IP based communication. In other words, an access point may refer to a physical or virtual interface that enables devices to connect to a network, facilitating the exchange of data between the user and the broader network infrastructure. It may take various forms, such as Wi-Fi access points, base stations, wired network gateways, or the like, providing entry points for communication.

The programmable transport network may refer to a network infrastructure that may allow for dynamical configuration, management of network resources, control (e.g., through software interfaces (e.g., software-defined networking)), and network programmability frameworks to enable fine-grained traffic management, automation, and rapid deployment of new services. This flexibility may foster innovation, improve scalability, and enhance the adaptability of networks to changing demands. It may allow for flexible integration of different access technologies, as discussed herein. The programmable transport network may be used to connect the users (connected to the access networks) to other networks (or "external network" as mentioned herein), such as the Internet, networks of partners, networks hosting any kind of value-add services, and the common core network, e.g., to care about service creation, control & management across all access technologies, and the like.

Segment Routing IPv6 (SRv6) may refer to an implementation of a programmable transport network. Such a network design may leverage programmability to enable rapid adaptation and optimization based on varying demands of services and applications. Such flexibility may be achieved through centralized control and orchestration, which provides real-time visibility and control over the entire network infrastructure. In the context of plain IP access, a programmable transport network may play a role in enhancing overall efficiency and performance of the network. By integrating programmability, the network may dynamically allocate resources, prioritize traffic, and adapt to changing conditions without manual intervention. This capability may ensure that real-time services (e.g., voice and video call) maintain a high quality of experience (of the user) comparable to traditional cellular networks.

Thus, in some examples, the method further includes dynamically adjusting, using a programmable transport network, network resource allocation in response to a variation in network load. Network resource allocation may refers to distributing and managing available network resources (e.g., bandwidth, transmission power, computing capacity, traffic management, and the like) to ensure efficient data transmission and quality of service. For example, if a router is handling a certain amount of traffic (e.g., above a predetermined threshold), additional traffic may be re-routed via another router or more bandwidth may be made available.

In some examples, the method further includes applying functional chaining to the IP packets by dynamically inserting one or more network functions into a routing path of the native IP packets based on control commands from the common core network.

Functional chaining may refer to a process that allows the network to perform specific operations on the network traffic as it traverses the system. Functional chaining may enable the implementation of various network services, such as firewalls, load balancers, and intrusion detection systems, in a flexible and scalable manner. This approach might not only improve security and performance but also simplify deployment and management of these services. Thereby, the programmable transport network may take over the role of ensuring data plane security. Functions such as traffic inspection, anomaly detection, and encryption may be embedded within the network through functional chaining, thus providing robust protection mechanisms comparable to traditional UPF-managed security measures.

A control command may refer to an instruction sent by the core network to configure, manage, or optimize the transport network's operation, e.g., ensuring efficient data transmission and resource utilization. A control command may include actions such as setting up, modifying, or tearing down network paths, adjusting traffic routing, or enforcing quality of service (QoS) policies.

The programmable transport network may further support the unified control plane of plain IP access. This integration may enable seamless coordination between different access technologies and the common core network, e.g., for fostering a more cohesive and flexible network structure. The programmable nature of the transport network may also facilitate adaptation of mobility mechanisms to the specific requirements and capabilities of various services and terminals, ensuring optimal performance and user experience, such as the mobility scenario discussed above, without limiting the present disclosure in that regard.

Overall, the synergy between a programmable transport network, plain IP access, and functional chaining may result in a more adaptable, efficient, and future-proof network infrastructure capable of meeting the evolving demands of modern telecommunications.

The programmable transport network may also assume functions traditionally handled by the User Plane Function (UPF), among other components, thereby functioning as a mobility anchor. For instance, it may manage traffic routing and forwarding, which may be critical tasks typically performed by the UPF. By leveraging software-defined networking (SDN), the programmable transport network may dynamically direct data paths to optimize traffic flow and ensure efficient resource utilization.

By adopting these roles, the programmable transport network might not only maintain high performance and reliability but also enhances the flexibility and scalability of the network architecture, paving the way for future innovations and efficient management of emerging technologies.

In some examples, the method further includes concurrently establishing at least two connection sessions between the UE and the common core network via the base station and an additional access node based on a multipath transport protocol.

Concurrently establishing of at least two connections may refer to a case where two connections are established at (roughly) the same time. This may also encompass a case where two connections alternate (e.g., in a predetermined pattern), partially overlap in time, or are established at the same time for the same time (or overlap for a predetermined amount of time). For example, a connection to the base station may alternate with a connection to an additional access node (e.g., a Wi-Fi access point, another base station, or the like). For example, for a first amount of time, the UE may only be connected to the base station. Then, for a second amount of time, the UE may be connected to both the base station and the additional access node. And then, for a third amount of time, the UE may only be connected to the additional access node.

All kinds of access networks/nodes/points (e.g., mobile access, Wi-Fi, Non-Terrestrial Networks - NTN, but also any kind of potential future network technology) may be envisaged and used to provide access for the UE. For example, based on using standardized Layer 4 protocols such as Multipath Transmission Control Protocol (MPTCP) and Multipath QUIC (without limiting the present disclosure in that regard), a UE may be capable of aggregating the performance of multiple access networks and compensate varying signaling conditions (e.g. in the context of mobility).

Fig. 9 depicts a sequence diagram of an exemplary method 500 based on which mobility may be realized with a layer 4 protocol. However, the present disclosure is not limited to a layer 4 protocol - also higher layer protocols may be used. For example, mobility may be provided on an application layer.

At 501, the intelligent UE (IEU - as will be discussed below) may connect to Base Station 1 which assigns, 502, an IP address x to the IUE. UE and IUE may be used synonymously, but the present disclosure is not limited to the case that an IUE always needs to be used. Generally, aspects relating to intent-based communication may be based on using an IUE, as will be discussed below, but other aspects of the present disclosure may not be limited to using an IUE.

At 503, authentication and transport network configuration may take place. Successful authentication may be transmitted, 504, to the common core network. In turn, the common core may allow, 505, communication of IP x with an external network via the programmable transport network. In turn, a controller of the programmable transport network may reconfigure, 506, transport network router 1.1 for communication with the external network. It should be noted that "programmable transport network" and "transport network" are used synonymously herein, but the present disclosure is not limited to the case that a programmable transport network is always needed. For example, the aspects relating to the IUE may also function without a programmable transport network, in some examples.

For charging purposes, router 2 may count, 507, the data volume.

At 508, the IUE may connect to the application via a layer 4 protocol and start, 509, traffic flow in both uplink (UL) and downlink (DL) directions through BS1 (i.e., bidirectional data traffic/communication may be established). The application can either be located in the Internet or be part of a value added service.

When the IUE moves, 510, into the coverage area of Base Station 2 (BS2), the IUE may detect, 511, potential upcoming performance problems with the link to BS1 and connect, 512 to BS2 in parallel (or: concurrently). BS2 may assign, 513, a second IP address y to the IUE. This may imply a significant change to the protocols and principles of today's mobile networks (e.g. according to the 3GPP 5G standards), where a UE uses a single IP address.

In an alternative example, the additional connection to the second BS may be triggered by the network. Similar to a handover command, the network may send a command the IUE to add a connection to the second BS while staying connected to the first.

The IUE may inform, 514 the core network that a secondary IP address y is used in parallel with IP address x. In turn, the common core may allow, 515, communication of IP y with the external network, and the controller of the transport network may reconfigure, 516, router 1.1 for that purpose.

Via the link to BS2 and using IP address y, the IUE may add, 517, a secondary path, allowing traffic flow through both BS1, 518, and BS2, 519.

When the IUE detects, 520, that the link to BS1 is no longer needed the IUE may remove, 521, the path bound to IP address x and inform, 522, the core network that IP address x is no longer used.

The Common Core may instruct, 523, the Transport Network Controller to revoke the allowance for communication of IP address x and request, 524, the data volume for IP address x from the last session, which is sent by the transport network at 525.

The IEU may disconnect, 526, from BS1 such that bidirectional traffic may flow only via BS2. Upon disconnection, 527, from BS2, a similar process may be applied as previously described, such that a repetitive description thereof is omitted.

The described approach may require the application to be multipath capable. If that is not the case, it may also possible to implement an alternative using a multipath proxy. In such a case, the IUE may connect via one or multiple paths to a multipath proxy server. The multipath proxy server may then forward data from and to the application via standard non-multipath protocols. The multipath proxy server may be hosted in the telecommunication network or in the Internet (or other networks).

In some examples, the method further includes receiving, by the common core network, authentication data of the UE for enabling the bidirectional IP data communication. Authentication data may refer to security-related information used to verify an identity of a user or UE before granting access to the external network. This data may include cryptographic keys, challenge-response values, authentication vectors, and the like, which may be exchanged between the UE, the base station, and the core network to prevent unauthorized access and ensure secure communication.

In some examples, the method further includes determining an access policy for the UE for the bidirectional data communication based on the authentication data. Access policy may refer to a set of rules and conditions that determine whether a user or device is allowed to connect to and use the network. Such a policy may be enforced based on authentication results, subscriber credentials, network conditions, security requirements, or the like, to regulate access, prioritize traffic, and ensure compliance with operator-defined restrictions.

As indicated above, a walled garden may be implemented in the common core network, as discussed above.

Some examples pertains to a telecommunication network including a UE, a base station, and a common core network (similar as discussed under reference of Fig. 2 and the aspects discussed below may be applied to the network of Fig. 2).

The UE may include circuitry (also referred to as an apparatus for a UE), e.g. including one or more interfaces, which are configured to communicate in the mobile communication system. The one or more interfaces are coupled to one or more processing devices (also referred to as processing circuitry in the present disclosure), which may be configured to perform one of the methods described herein.

In some examples, the UE includes first interface circuitry configured to establish a control plane with a common core network for coordinating network resources for the UE. The UE may further include second interface circuitry configured to establish a data plane with an access point of a communications network for coordinating UE data traffic. In such examples, the data plane may be separated from the control plane.

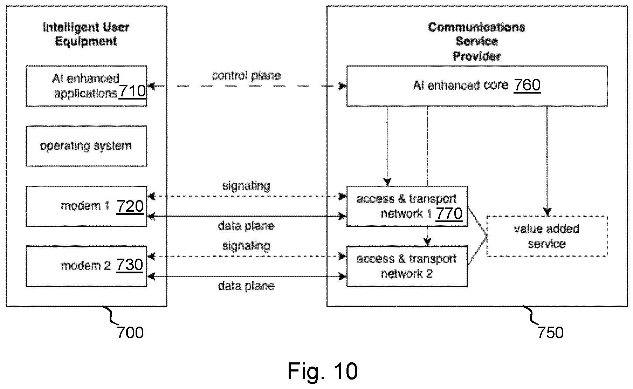

Such an example is depicted in Fig. 10 that shows a block diagram of a UE 700 and of a network 750. The UE 700 includes first interface circuitry (Al enhanced applications) 710 and a second interface circuitry (first modem) 720. As can be taken from Fig. 10, the first interface circuitry 710 establishes a control plane with a common core network (Al enhanced core) 760. On the other hand, the first modem 720 establishes a data plane and carries out signaling with a first access and transport network 770.

Although the control plane data packets may be exchanged via the data plane, this may be the only connection between these two planes. The control plane may be used for instructing the data plane based on the Al enhanced applications and Al enhanced core, as discussed herein.

Since performance and capabilities of UEs (e.g., smartphones, notebooks, AR glasses, or the like) have increased significantly in the last years, a UE may be capable of using of a multitude of access technologies and sensors in parallel. It may be able to control complex interactions also with the help of AI, e.g. interacting with the network core of a CSP (communication service provider) to determine which networks and services are most appropriate to be used at the current location and time, thereby accounting for all available access technologies.

CSPs may, at the same time, be aiming for extending their service offering and providing the service quality which may match intents of the consumers. Therefore, an interaction pattern according to Fig. 10 is proposed in the present disclosure, which may enhance capabilities of the UE with the help of a common core network.

The Al enhanced applications 710 may utilize context information, e.g. contacts, time, geo-location, gestures, verbally expressed requests of the user, or the like, to determine the intent of the consumer (or of other network clients). This intent may be transmitted via control plane channel to the common core network. The Al-powered core 760 may, in a dialog with the UE, interpret the intent and derive, for example at least one of:
- The endpoints, i.e. communication partners and/or service endpoints derived from the intent
- The type of communication between these endpoints
- The quality aspects of the communication (e.g. security, performance, ...)

The common core may, with the help of this information, provide the required services with the appropriate quality, potentially even including value-added services which may be managed by the CSP or 3rd parties.

A further discussion of intent-based communication is given below. Returning to Fig. 10, the UE 700 may further include third interface circuitry (second modem) 730 configured to establish a further data plane with a further access point (e.g., of any access technology, as discussed herein) of the communications network for coordinating the UE data traffic.

Thereby, mobility functions may be provided, as discussed above, such as handover, the use of multiple IP addresses, and the like.

In such an example, the base station may include circuitry including one or more interfaces, which may be configured to communicate in the mobile communication system. The one or more interfaces may be coupled to one or more processing devices (or processing circuitry), which may be configured to perform one of the methods described herein.

The processing circuitry of the base station may be configured to receive a connection request from the UE. The connection request may be based on IP packets generated by the UE. The processing circuitry may be further configured to forward the received IP packets as native IP packets via an IP interface to a common core network, as discussed herein.

The core network may include circuitry including one or more interfaces, which may be configured to communicate in the mobile communication system/network. The one or more interfaces may be coupled to one or more processing devices (or processing circuitry), which may be configured to perform one of the methods described herein.

As indicated above, the core network may be a common core network. Thus, the common core network may be configured to enable bidirectional IP data communication between the UE and an external network based on an established IP session. The established IP session may be established based on a connection request of the UE that is based on IP packets generated by the UE that are forwarded as native IP packets by the base station to the common core network, as discussed herein.

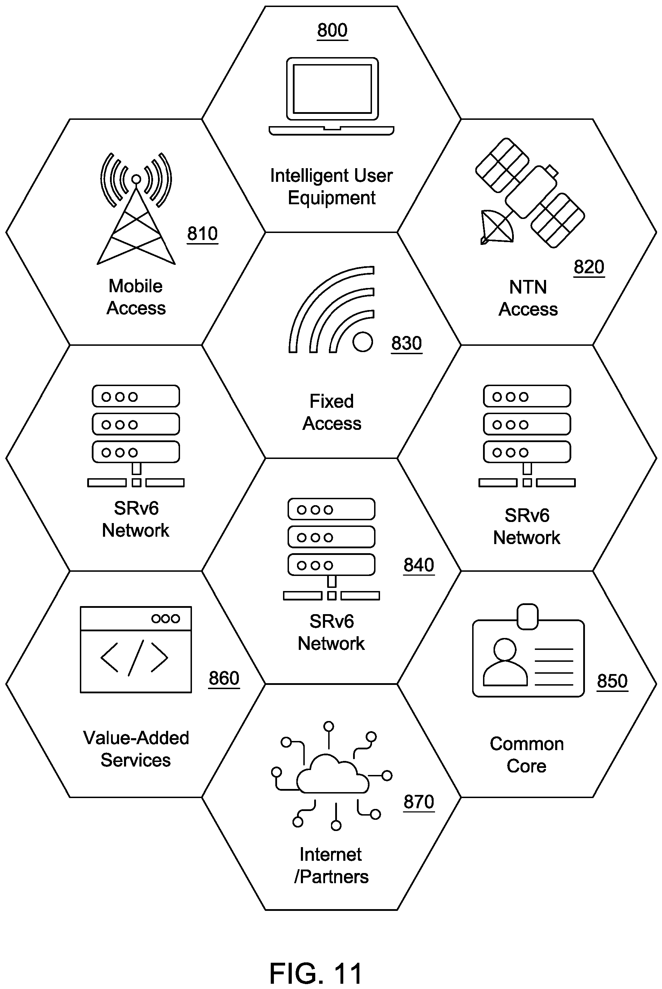

Fig. 11 depicts an overview the principles of the present disclosure by means of a high-level block diagram.

An IUE 800 may have access to an arbitrary access technology, such as mobile access 810, NTN access 820, or fixed access 830 (or to all of them). These access technologies may be connected via an (SRv6) programmable transport network 840 to a common core 850 for authentication of the IUE 800, such that access to an external network 860 and/or 870 may be granted.

Thereby, a lean network architecture for telecommunication networks may be provided which may be based on at least one of four principles:
- Making use of Internet principles, technologies, and equipment for telecommunication networks as much as possible to benefit from higher economies of scale
- A single architecture for all kinds of access networks
- Bundling the performance of all available access networks
- The network uses the customer intent to provide the exact amount of resources required for that

For example, the network of Fig. 11 may be adopted as follows:
1. The IUE 800 connects to one or multiple provided access networks
2. At least one of the access network 810, 820, and/or 830 provides IP connectivity and announces the location of a walled garden in the common core 850
3. The programmable transport network 840 is used to control and steer traffic such that only appropriate networks can be reached by the customers. A newly attached user can only access the walled garden. After authentication, rule policies are modified such that the customer can connect also to other networks.
4. The UE performs an initial access to the walled garden of the common core and authenticates
5. After authorization, the SRv6 network is programmed so that UE can access the Internet
6. Authorization may also allow the UE to access other value-added services.
7. The UE can then, via all available access networks and a single architecture consume Internet or value-added services.

As indicated above, in the following, aspects pertaining to intent-based communication are discussed. These aspects and sub-aspects may be combined with any one of the aspects mentioned above and also combined with each other.

Some examples pertain to a method (and likewise to an apparatus and/or circuitry) for allocating resources of a mobile telecommunications network. The method may include receiving intent data indicative of an intent.

An intent may refer to a declarative goal or user/customer demand specified by at least one of a user of the UE, the UE, an loT device (which may also be referred to as UE), a client of the network, and at least a part of the network. Accordingly, the resources may be allocated to fulfill the derived intent. For example, the declarative goal may be given in structured or natural language. For example, a user of the UE may specify, e.g., by speech, text, gestures, a requested service, such as video streaming, voice call gaming, or the like. On the other hand, customer demand may be recognized implicitly. For example, the UE may recognize the goal of the user based on the user's behavior, such as when the user opens an application, is at a certain location, or the like. For example, the intent data may be generated by classifying a launched application on the UE into one or more service categories. Such classification information may be included in the intent data. However, the customer demand is not limited to individual users - also a collective intent (for multiple customers) may be recognized. For example, if it is recognized that a sports game is broadcasted or televised, the intent may be anticipated that many people may want to watch the game.

In some examples, the intent may includes at least one of a list of communication partners and involved service endpoints, a requested type of communication (e.g. video, text, or the like), communication qualities (e.g. reliable, secure, high bandwidth, or the like), and consumer context (e.g. moving, silent area, or the like).

A client of the network may refer to any entity that communicates with the network, such as a third party service, a network service, or the like. "Part of the network" may refer to any component, subsystem, or entity within the network infrastructure that contributes to its overall functionality, including devices, nodes, links, or software elements that facilitate communication, data transfer, network management, or the like.

In some examples, the method includes (or the apparatus/circuitry is configured for) determining, based on the intent, a current and a projected network resource status using a network digital twin.

Current network resource status may refer to the real-time availability and utilization of network resources, such as bandwidth, processing power, transmission capacity, currently applied configuration of a certain resource, and the like, at a given moment. It may include metrics like congestion levels, active connections, latency, load distribution across different network elements, and the like. Projected network resource status may refer to anticipated future (near-term and/or long-term) state of network resources based on predictive analysis, historical data, traffic trends, and the like. Such projection may help in capacity planning, load balancing, and proactive resource allocation to ensure optimal network performance and prevent bottlenecks. Also, historic data of the network may be used to derive options for a future configuration.

A network digital twin may refer to a virtual replica of the network that (ideally accurately) models its structure, behavior, and performance in real time. It may integrate data from the live network, including traffic patterns, resource utilization, device interactions, or the like, to simulate and analyze various network conditions. This digital representation may enable an operator to test configurations, optimize performance, predict the impact of changes without affecting the actual network. AI (artificial intelligence) and analytics may enhance the digital twin by identifying potential failures, improving security, and suggesting proactive optimizations. The model may be continuously updated based on real-time telemetry, historical data (e.g., customer intents and corresponding (derived) service blueprints as well as historic network states), and the like, ensuring accuracy and reliability. The digital twin may be used in cellular communication, IoT (internet of things), enterprise networks, or the like, for efficient planning, troubleshooting, and decision-making. The digital twin may be created by collecting real-time and historical data from the physical network, including topology, traffic patterns, resource usage, device interactions, and the like, to build a virtual model. It may be trained using machine learning algorithms, Al-based simulations, predictive analytics, or the like, allowing it to learn network behaviors, detect anomalies, and optimize performance. Continuous updates and feedback from live network telemetry may refine the model over time, ensuring its accuracy and effectiveness in predicting and managing network conditions.

In some examples, determining the current network resource status further includes predicting future required resource availability based on simulation data provided by the network digital twin. In some examples, the network digital twin is implemented as a virtualized model of the physical network infrastructure. The virtualized model may be used to simulate the effect of varying network loads on at least one of resource availability, customer experience, and energy consumption.

A machine-learning (or machine-learned) model may refer to a data structure and/or set of rules representing a statistical model that is used to determine an output. The data structure and/or set of rules may represent learned knowledge (e.g. based on training performed by a machine-learning algorithm as described herein). In machine-learning, instead of a rule-based transformation of data, a transformation of data may be used, that is inferred from an analysis of training data.

The machine-learning model may be trained based on a machine-learning algorithm. The term "machine-learning algorithm" may denote a set of instructions that are used to create, train or use a machine-learning model. For the machine-learning model to determine an output, the machine-learning model may be trained using training data. By training the machine-learning model with a large set of training data, the machine-learning model may learn to determine the output. In other words, by training the machine-learning model, the machine-learning model may learn a transformation between input data and appropriate output data.

The machine-learning model may be trained using training input data. For example, the machine-learning model may be trained using a training method called "supervised learning". In supervised learning, the machine-learning model may be trained using a plurality of training samples, wherein each sample may include a plurality of input data values, and a plurality of desired output values, i.e., each training sample is associated with a desired output value. By specifying both training samples and desired output values, the machine-learning model may learn which output value to provide based on an input sample that is similar to the samples provided during the training.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input may be classified to one of the limited set of values. Similarity learning algorithms are similar to classification algorithms but are based on learning from examples using a similarity function that measures how similar or two related objects are.

Apart from supervised or semi-supervised learning, unsupervised learning may be used to train the machine-learning model. In unsupervised learning, (only) input data may be supplied and an unsupervised learning algorithm may be used to find structure in the input data (e.g. by grouping or clustering the input data, finding commonalities in the data). Clustering may refer to an assignment of input data including a plurality of input values into subsets (clusters) so that input values within the same cluster are similar according to one or more (pre-defined) similarity criteria, while being dissimilar to input values that are included in other clusters.

Reinforcement learning may refer to another group of machine-learning algorithms. In other words, reinforcement learning may be used to train the machine-learning model. In reinforcement learning, one or more software actors (called "software agents") may be trained to take actions in an environment. Based on the taken actions, a reward may be calculated. Reinforcement learning is based on training the software agents to choose the actions such that the cumulative reward is increased, leading to software agents that become better at the task they are given (as evidenced by increasing rewards).

Furthermore, additional techniques may be applied to some of the machine-learning algorithms. For example, feature learning may be used. In other words, the machine-learning model may at least partially be trained using feature learning, and/or the machine-learning algorithm may include a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an Artificial Neural Network (ANN). ANNs are systems that are inspired by biological neural networks, such as can be found in a retina or a brain. ANNs include a plurality of interconnected nodes and a plurality of connections, so-called edges, between the nodes. There may be three types of nodes, input nodes that receive input values, hidden nodes that are (only) connected to other nodes, and output nodes that provide output values or data. Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may include adjusting the weights of the nodes and/or edges of the ANN, i.e., to achieve a desired output for a given input.

Alternatively, the machine-learning model may include a different structure and, e.g., be a support vector machine, a random forest model or a gradient boosting model. Alternatively, the machine-learning model may be based on a genetic algorithm, which is a search algorithm and heuristic technique that mimics the process of natural selection.

In examples, the machine-learning model may be a combination of any of above examples.

In some examples, the method further includes allocating network resources in accordance with the intent based on the determined resource status. For example, the network resources may be allocated to different actors (separately or in combination) in the network, such as the UE, a third party service, an access node, a network service, or the like.

In some examples, the determining of the current and the projected network resource status further includes simulating, using the network digital twin, network conditions based on at least one of historic, current, and projected data from at least one of radio access network elements, transport network elements, and core network elements.

In some examples, the allocating of the network resources includes generating a service blueprint that dynamically maps the intent to network configurations and subsequently transmitting control commands to effect a determined network configuration. The service blueprint may refer to a detailed framework that defines the structure, components, and processes required to deliver a specific network service. It may map out interactions between different network layers/elements, including the user plane, control plane, and management functions, to ensure seamless service delivery. The blueprint may include key elements such as network functions, data flows, service-level agreements (SLAs), and quality of service (QoS) requirements. Additionally or alternatively, a service blueprint may describe a desired target state of a subset of all available network resources/services. This may includes, for each listed resource/service, at least one of the following information: Lifecycle state (initial i.e. not deployed, inactive, active, or the like), configuration, relationships to other resources/services along with the configuration of each relationship, timeframe(s) (from, until, repetition), or the like. Thereby, optimal service may be designed, deployed, and optimized while ensuring compliance with performance and reliability standards. By providing a clear visualization of service dependencies and interactions, a service blueprint may enhance efficiency, troubleshooting, and scalability in mobile network operations. According to the some examples, the service blueprint may be generated by a large language model (LLM) receiving the intent and "translating" the intent into the service blueprint. Thereby, high flexibility and dynamicity of service blueprints may be achieved. An LLM may refer to an advanced Al system (or machine-learning model) trained on vast amounts of text data to understand, generate, and process language. For example, using deep learning techniques, particularly transformer architectures, LLMs may perform tasks such as text completion, translation, summarization, and contextual reasoning across various domains.

The blueprint may be indicative of at least one of the following:
- Quality of Service (QoS) Requirements: The expected level of service quality, including parameters such as latency, bandwidth, and jitter.
- Priority Levels: The importance of the service or application, which helps in prioritizing resource allocation.
- Usage Patterns: Historical and real-time data on how users interact with the network, influencing resource distribution.
- Energy Efficiency Goals: Objectives related to reducing energy consumption, facilitating the load-adaptive operation of the network.
- Service-Specific Needs: Custom requirements unique to specific services or applications that the network must cater to.

On the other hand, a cascaded approach may be taken, if not each configuration of each resource is defined directly. Thereby, configuration over several automation layers may be derive.

In some examples, the method further includes updating the allocation of network resources in real time by re-determining the current network resource status using the network digital twin in response to updated intent data received from the UE. In other words, the digital twin may continuously surveil the network and consider current and projected resource status based on current and changing intents.

Hence, in some examples, the network digital twin is continuously updated with real-time performance data from network elements. In such examples, the resource allocation may be dynamically adapted to reflect current network load.

In some examples, the allocating of the network resources further includes configuring a programmable transport network to set up routing paths for bidirectional data communication between the UE and an external network, such as discussed above.

In some examples, the method further includes storing historical data regarding network resource allocation decisions, and using the stored data to optimize future allocations based on learned patterns of UE intent. Hence, decision/allocation algorithms in the digital twin may be refined based on such stored data. Refinement may relate to the process of improving its accuracy, efficiency, and generalization, e.g., by fine-tuning parameters, optimizing algorithms, or incorporating additional training data. This may involve techniques such as hyperparameter tuning, transfer learning, data augmentation, iterative retraining, or the like to enhance model performance and reduce errors.

In some examples, the data indicative of the UE's intent (or: intent data) is received via an interface supporting natural language input, and wherein the intent is identified based on a machine-learning model, such as an LLM, as discussed above.

Some examples pertain to a method for determining an intent (as discussed above) of user equipment, UE, (or of a user) in a mobile telecommunications network. The method may include generating intent data indicative of the intent and transmitting the data to an intent handler instance.

The data may include any collected information that suggests a user's or UE's intent. The data may come from various sources, such as user interactions, behavioral patterns, command inputs, contextual signals, or the like, and may be analyzed to infer the intent. For example, the data indicative of the intent may be generated by capturing user input in natural language via a speech interface or text entry on the UE, based on the user opening an application, the user being at a certain location, or the like. For example, the data indicative of the intent further includes contextual information comprising at least one of location data, temporal data, device status data, and a utility-value function. In some examples, the intent may be confirmed over time. If it is determined that the intent is obsolete (no longer valid), the resources may be deallocated.

The intent handler instance may refer to a functional entity configured to interpret and process high-level intent-based requests to configure or optimize network behavior. It may receive the intent data, and translates it into actionable network policies or configurations. This instance may interact with any network entity to implement changes dynamically, ensuring alignment with user or business objectives. By continuously monitoring network conditions, an intent handler instance can also adjust policies in real time to maintain performance, security, and reliability. For example, the intent handler instance may implement or communicate with a digital twin mentioned above.

The method may further include identifying, by the intent handler instance, a suitable network designer instance located in the network to allocate resources in accordance with the intent.

The network designer instance (of which multiple instances may be present in the core network and/or transport network), may refer to is functional entity within a network responsible for planning, optimizing, and allocating network resources based on high-level intent requests. When the intent handler instance identifies a need for resource allocation, it may select a suitable network designer instance to translate the intent into a detailed network configuration or provisioning strategy (or service blueprint, as discussed above). This instance may analyze factors such as current network capacity, projected demand, quality of service (QoS) requirements, policy constraints, or the like to generate an optimized resource allocation plan. By dynamically adapting to changing network conditions, the network designer instance may ensure efficient utilization of infrastructure while maintaining service performance and reliability.

In some examples, the UE processes the captured natural language input using a machine-learning model to convert the input into structured intent data. Hence, the present disclosure is not limited to any location of the intent handler instance. The intent handler instance may partially or fully be realized within the UE, partially or fully in the network, or partially or fully in a cloud. Also, combinations thereof may be envisaged.

In some examples, the method further includes, at the UE, presenting a user interface that displays service recommendations based on current network conditions, wherein a user selection from the displayed recommendations is incorporated into the generated intent data.

Thereby, before the intent data are generated, the user may be given a choice as to what service they would prefer. For example, if the intent is video streaming, the user may be given the choice between good quality and bad quality. Choosing bad quality may be rewarded (e.g., less costs for the user) since this choice may not lead to a high demand of resources.

In some examples, the method further includes determining a type of intent, the type including at least one of an application intent and a communication intent.

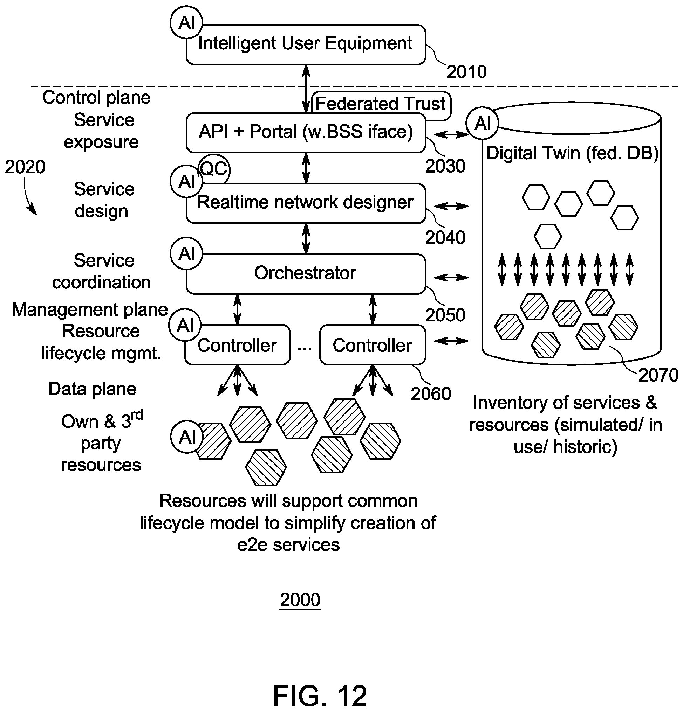

Fig. 12 depicts a high-level diagram of a network 2000 for intent-based communication including an IUE 2010 and a (common) core network 2020 including an API 2030 for communication with the IUE 2010, a realtime network designer (instance) 2040, an orchestrator 2050, and multiple controllers 2060. All or a subset of these entities may be configured to communicate with a digital twin 2070. In this example, the IUE 2010 includes the intent handler instance, but the present disclosure is not limited in that regard. Also, any of the elements mentioned herein may be based on an artificial intelligence which may be specific for a particular task handled by the element/instance. In other words, the present disclosure is not limited to any Al and the instances may be based on different or the same Als.

The IUE 2010 may serve as the primary interface through which customers can express their intent, e.g., by using spoken natural language. The IUE 2010 may be equipped with advanced Al capabilities to process and understand user commands, ensuring that the user's intent is accurately captured and conveyed to the network.

The IUE 2010 may be able to evaluate and signal at least a part of the user's intent. The user's intent may then be signaled to the common core network to provide the required resources. There may be different options how the IUE 2010 can evaluate the user's intent, such as at least one of the following:
- Applications on the IUE 2010 may be categorized according to their requirements (e.g. messaging, video streaming, real time interaction, ...). When a user launches an application, this category may be used as an estimate of the user's intent.
- Artificial Intelligence may be used to understand natural language of the user and to analyze the user's intent (for example the user could say "I would like to watch the movie xyz")

The IUE may additionally or alternative be configured for service-aware communication. In such examples, communication may capture which service and communication endpoints will need to interact in which manner in order to fulfill the intent. The UEs may themselves also serve as service endpoints (e.g. to expose medical data to the clinic or the location and status of containers) which may be registered and discovered via the future control plane protocol. Users may have the possibility to dynamically and securely expose IP based service endpoints running on their devices with trusted communication partners.

The Real-Time Network Designer (RTND) 2040 may facilitate dynamic and efficient network design. Utilizing sophisticated algorithms and real-time data, it may adapt to ever-changing network demands, intents and configurations. By leveraging the digital twin 2070, the designer 2040 may be able to simulate multiple scenarios, predict potential issues, and optimize network performance proactively. This may ensure seamless and efficient delivery of services, enhancing the overall user experience.

The network digital twin (NDT) 2070 may refer to a virtual representation of the physical network infrastructure, encompassing all its components and their interactions. This digital model may allow for real-time simulation, analysis, and optimization of network performance, thus ensuring that the network remains responsive to varying demands.

The primary role of the orchestrator 2050 may include managing and automating the end-to-end service lifecycle, e.g., from provisioning to maintenance and optimization. The orchestrator may utilize advanced Al and machine learning algorithms to analyze real-time data, make intelligent decisions, and dynamically adjust network configurations to meet user intents and network demands. It may ensure that the network operates efficiently, reliably, and resiliently by maintaining optimal resource allocation and utilization.

The (resource) controller 2060 may be responsible for managing and optimizing network resources. It may act as a bridge between the orchestrator and the network elements, ensuring that the orchestrator's high-level intents are translated into specific configurations and actions. The resource controller may continuously monitors the network's state, making real-time decisions to allocate resources efficiently and address any arising issues. Controllers 2060 may expose a common API to the orchestrator which may allow the orchestrator to manage the controllers 2060 in a harmonized manner by handing over target states and retrieving status updates. Lifecycles of the resources may be managed by the controllers 2060. The orchestrator 2050 may ensure that the dependencies between the lifecycle states of the different resources are accounted for. For example, in an example in which an application server requires a database service, the orchestrator 2050 may ensure that the database is up and running before activating the application server.

The UE 2010 may convey its intent via the API 2030 towards the core 2020, already specifying the network designer 2040 as the suitable one for the intent. In this example, the intent specifies either in natural language format or as structured machine-readable specification at least one of:
a) the communication partners,
b) the type of communication and
c) the required service qualities
d) the required timeframes

The intent may be forwarded to RTND 2040 (realtime network designer), which may have the task to map a communication intent into a service blueprint, as discussed above. The service blueprint may include at least one of
a) a list of all needed resources,
b) their individual configurations and
c) the dependencies between these resources.

The RTND 2040 may consult the digital twin 2070 which may hold historic as well as current data of the network configuration and which may allow to evaluate different options for fulfilling the intent.

The implementation of the service blueprint may be coordinated by the orchestrator 2050 which may evaluate the dependencies and which, based on this information, may trigger the (atomic) transactions the resource controllers offer in the right sequence.

The resource controllers may be configured to manage the runtime lifecycle of resources and support at least one of the following operations:
a) creating or destroying a resource
b) configuring or re-configuring a resource
c) activating or de-activating a resource
d) obtaining the current state of a resource

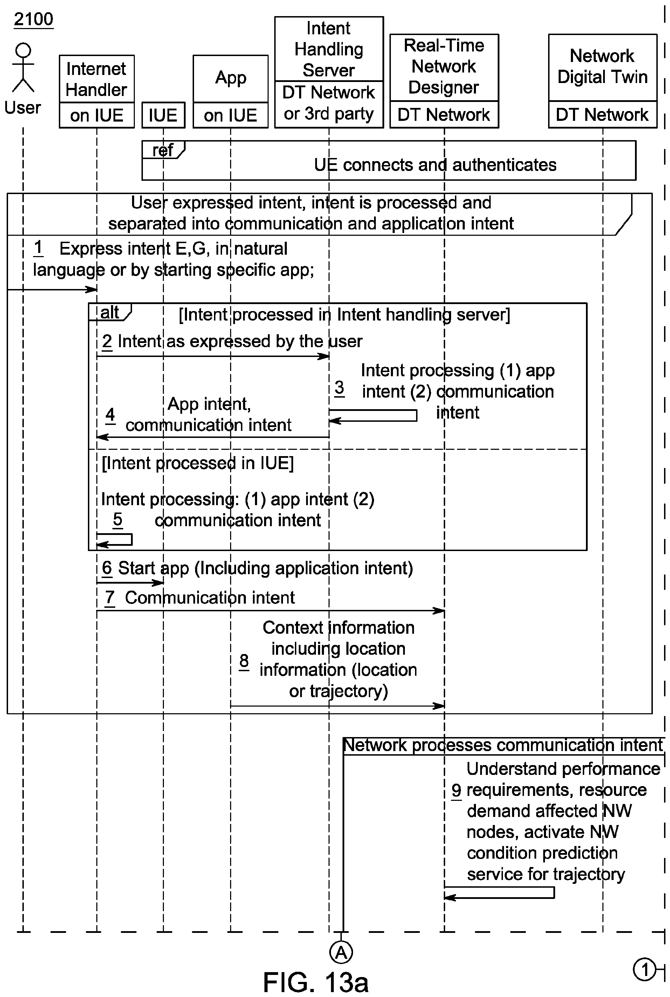

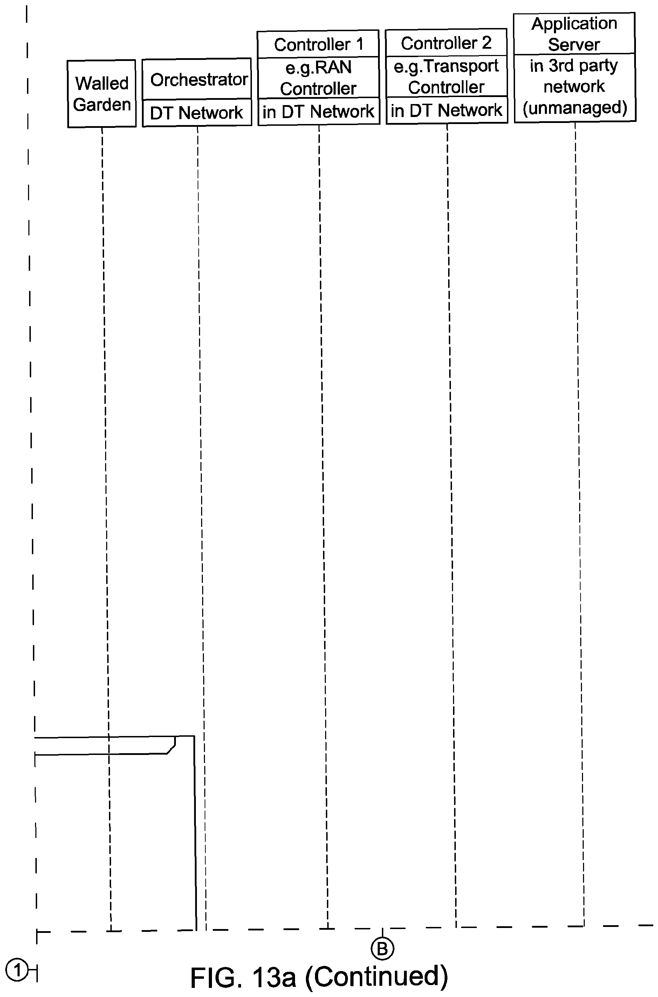

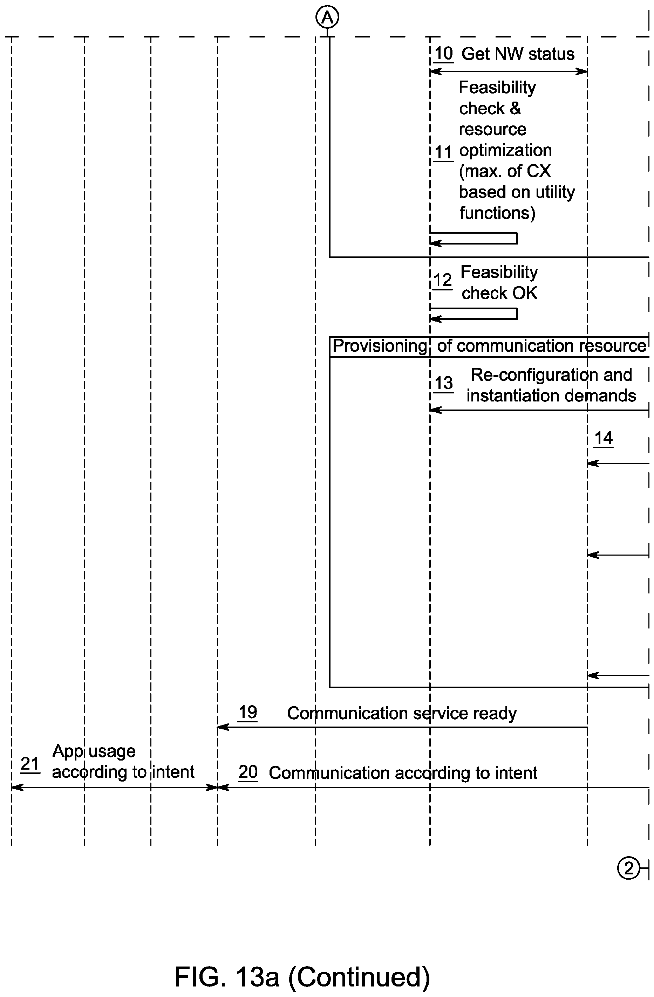

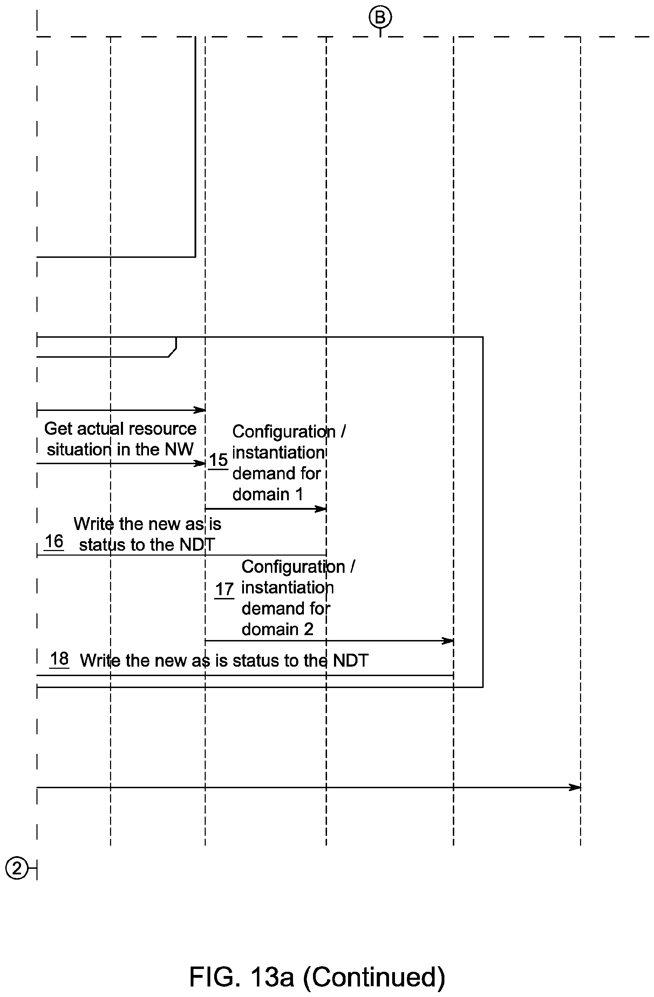

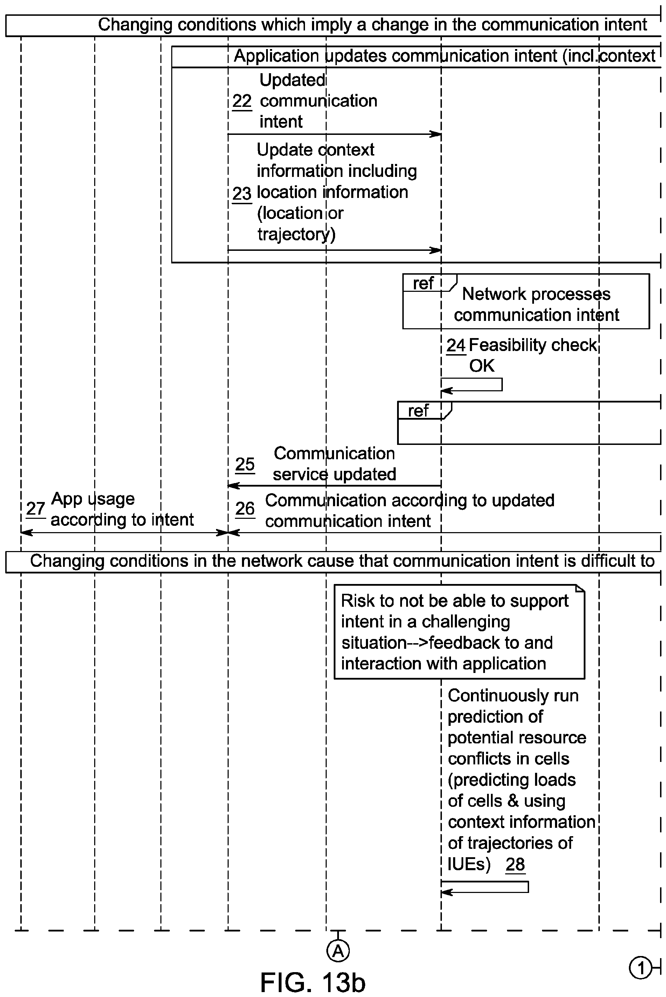

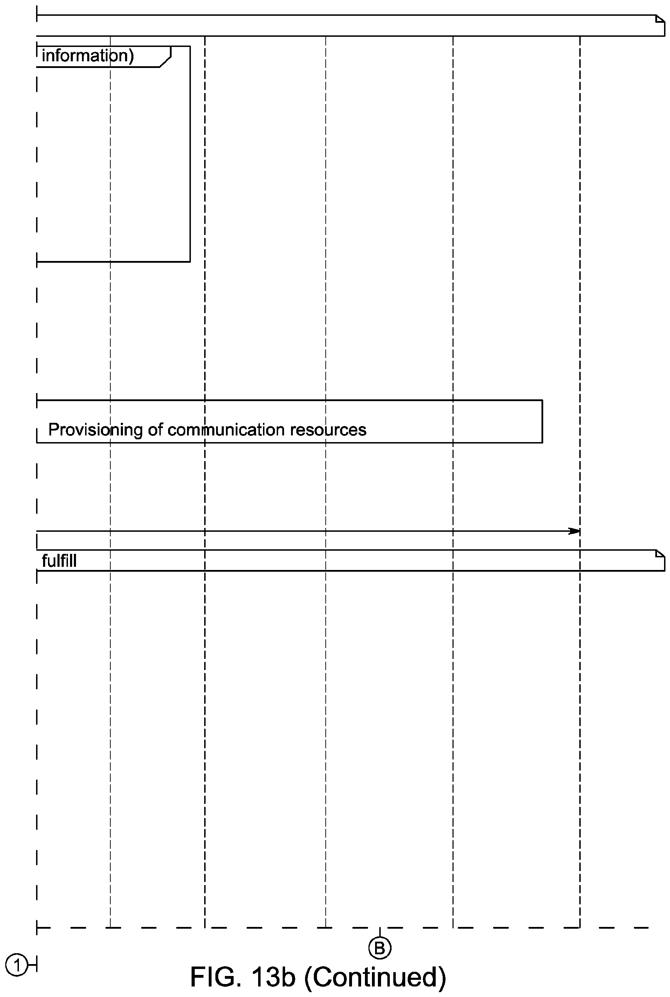

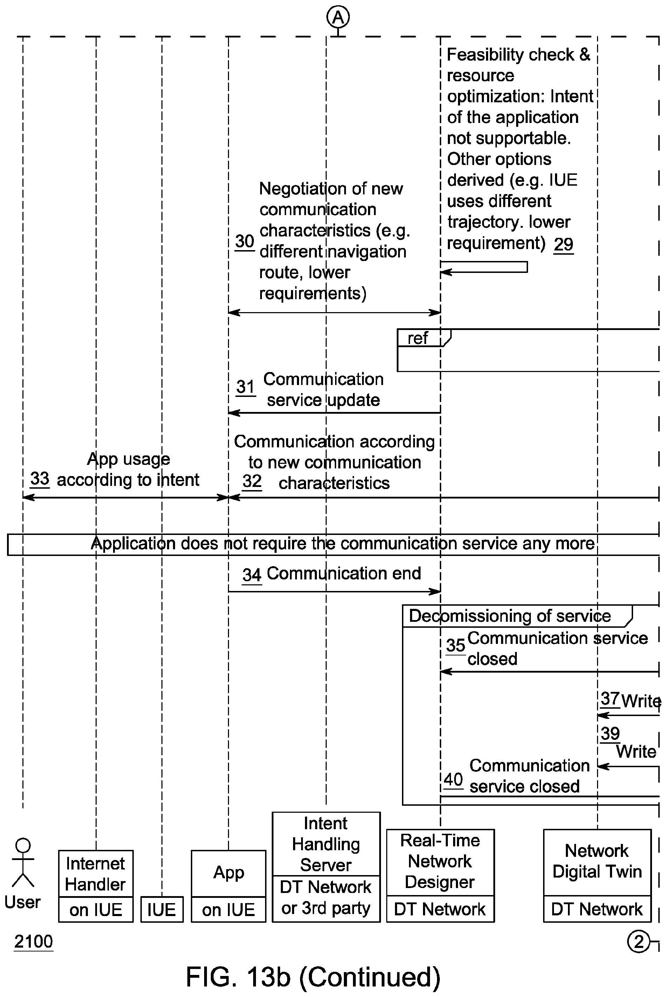

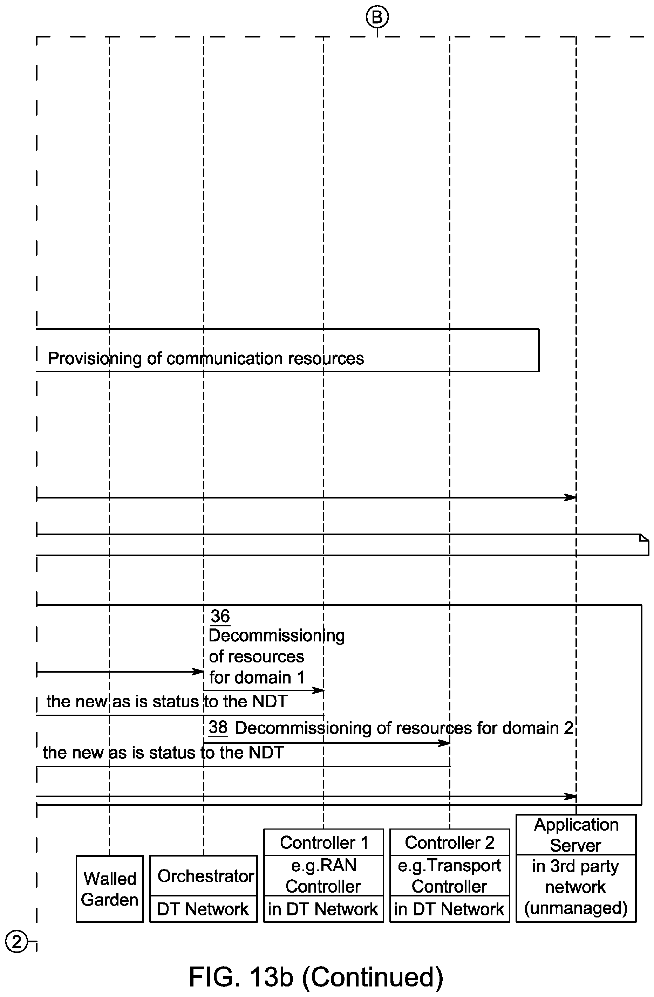

Fig. 13 depicts a sequence chart of an exemplary method 2100 for intent handling. Fig. 13 is split into Fig. 13a and 13b, but may be considered as one method, but it should be noted that any method step may be considered optional and be left out.

The method 2100 includes a user expressing, 1, their intent. In other words, the user may initiate the process by expressing his demand and wish. The user might not need know, which service and products are offered. They may just describe their demand, what they want to do, and when. With the help of an LLM, the user's description may be translated into the intent to be communicated to the network. For example, the user may express "I want to visit person x" or "I would like to call my doctor".

The Intent Handler on the IUE receives, 2, the user's description and processes, 3, (and potentially updates) the user's intent and may identify which type of intent is present, 4, such as an application intent, a communication intent, or the like, which may be processed accordingly, 5, by the intent handler.

An application intent may describe which application (app) is required to fulfill the intent. The application may be based on a local part (on the IUE) and an application server e.g., in a 3rd party network. The Intent Handler may instruct, 6, the IUE to start the corresponding application, such as a video conferencing application.

On the other hand, a communication intent may describe which communication is required to fulfill the intent. For example, high resolution video streaming along a certain route that the user will travel ("trajectory") may be a communication intent. The intent handler may exchange intent and communication endpoints with the application server, including information about the responsible/suitable RTND to which the intent is conveyed, 7, together with context information, 8.

In some examples, the application server, located in a third-party network, receives the communication intent and context information (such as location or trajectory) from the Intent Handler. It may then contact the RTND in order to request communication services appropriate to fulfill the user's intent. On the other hand, it may additionally or alternatively be envisaged that the application service interacts with the local application on the IUE and the local application contacts the RTND to request communication services.

Returning to Fig. 13a, the RTND may process the communication intent. The RTND may understand, 9, the performance requirements and resource demands (both DT and third-party networks). It may activate a network condition prediction service for the trajectory. It may create the proper communication, intent and actions for the orchestrator. This may happen in realtime and in combination with other user and service intents. The RTND may interact, 10, with the Network Digital Twin (NDT) to get the network status and perform, 11, a feasibility check and resource optimization based on utility functions. If the feasibility check is successful, the RTND may proceed with provisioning communication resources. The RTND may further generate a network blueprint. This blueprint may be handed to the orchestrator for execution. The period where this blueprint is usable may be short due to the ever changing user intents and conditions.

A utility-value function may refer to a function that maps utility (or value) of a service to a predefined parameter, such as performance (e.g. bitrate, latency, energy consumption,or the like). For example, for a teledriven car, the utility/value may be low for a low performance, but when a certain performance threshold is reached, utility/value may rise overproportional compared to the small performance increase. In such an example, it might make sense to slightly increase network resource allocation for the teledriving to increase the performance, thereby magnifying the utility/value of the service.

The NDT may provide the current network status to the RTND and receive updates on the new "as-is" status after configuration or instantiation demands. This may also support functionalities and features to test and validate the intent included services and features.

The orchestrator may handle, 13, re-configuration and instantiation demands. It may interact with the network controllers to configure or instantiate resources in different network domains. This may be based on information from the NDT, 14. There may be different controllers:
- Controller 1 may manages resources in domain 1 (e.g., RAN Controller).
- Controller 2 may manage resources in domain 2 (e.g., Transport Controller).
- Controller 3 may manages resources in domain 3 (e.g., NTN) as part of collaboration with third-party networks.

It should be noted that all controllers may support a common lifecycle model and thus, other types of controllers may be included as well. For example, a controller for managing local resources on customer side or services provided by a network operator (which might fall into the category of Controller 3) may be included.

The controllers may then update, 16 and 18, the NDT such that the NDT can maintain an overview about available and used resources (in a current state).

Then, communication and/or app usage according to the intent may be carried out, 20 and 21 upon notification that the notification service is ready, 19.

If conditions change and an update of the communication intent is required (e.g. higher or lower resolution required), the application server may update, 22, the communication intent (and/or context information, 23), and the RTND may re-evaluate, 24, feasibility. As an alternative to 22, the intent handler may update the communication intent. Thereby, programming of the corresponding application may be easier since the it might not be necessary to include intent handling in the application and the intent-handling may be carried out in a central manner. In case this is successful, the orchestrators may be requested to modify the communication resources accordingly.

However, there may be challenging situation. For example, the RTND may continuously predicts, 28, potential resource conflicts including a feasibility check, 29. If it faces challenges in supporting the intent, it may negotiate, 30, new communication characteristics with the application server. This may involve suggesting different trajectories or lowering requirements. As a note, previously, it was assumed that it was possible to fulfill the user's communication intent. However, also in these steps, it may be possible that a negotiation between application server and RTND is required.

If, the application no longer requires the communication service, 34, the RTND and Orchestrator may decommission, 35 and 36 and 38, the resources and configuration tables. The communication service may then be closed, 40, and the new "as-is" status may be written, 37 and 39 to the NDT.

Based on intents, load adaptive network operation may be further enhanced, e.g., to achieve significant energy savings. By dynamically adjusting the network's performance based on real-time user demand and the specific intents of applications, the network may optimize resource allocation and minimize energy consumption. This approach may ensure that only the necessary capacity is used at any given time, reducing the overall energy footprint and enhancing the network's efficiency. Through such a load-adaptive mechanism, the network may intelligently scale its operations, powering down unused resources during off-peak periods and ramping up performance to meet higher demand when required. The principle of intelligent scaling with load-adaptiveness may be based on the combination of technical procedures such as fine-grained power management of the base stations with intent-based mechanisms. This might not only conserve energy but also extend the lifespan of network components, contributing to long-term sustainability and cost-effectiveness.

In this concept, the intent may be key for this radical load-adaptive operation. By understanding and interpreting the specific needs and intentions of applications and users, the network can dynamically in near-real-time (e.g., some single digit milliseconds) adjust its resource allocation to match demand. This granular approach may allow the network to prioritize critical services, allocate bandwidth efficiently, and reduce unnecessary energy consumption. Examples of this intent based approach may include resource and energy management in the network. The intent of the user with their UEs may be, for example, the use of telephony. Telephony as an application may require only a low bandwidth (a few 10Kbps, depending on audio quality). Another application may be high-quality streaming of AR/VR content from a server to an AR/VR headset, which may require high bandwidth with low latency. According to the application used with the required quality, an application-specific intent may be created and made available to the network. Then, this intent may be used in the network to finely adjust resources and energy. Intent may trigger that the network can respond in real-time to varying demands, enabling a highly responsive and adaptive infrastructure. For instance, during periods of low demand, the network may scale down operations, conserving energy and reducing operational costs. Conversely, during peak times, the network may be able to swiftly scale up, ensuring optimal performance and user experience. Such an intelligent adaptation may be crucial for the sustainability and scalability of the network, as it not only enhances efficiency but also supports the integration of future technologies and services. By leveraging (user and service) intents, the network may become more resilient, capable of delivering high-performance connectivity while minimizing its environmental impact. User or service intent may be a concept that allows a telecommunication network to dynamically adjust its operations based on the specific needs and requirements of applications or users. This approach may enable more efficient resource allocation and may significantly enhance the network's adaptability and sustainability.

For example, consider a telecommunication network supporting a mix of video streaming services and IoT (Internet of Things) applications. During a major sports event, the demand for high-quality video streaming may spike. The network may recognize this surge in user intent for high bandwidth and low latency. It may dynamically (and automatically) reallocate resources to ensure seamless streaming experiences by prioritizing video traffic. Simultaneously, during off-peak periods, the network may identify reduced demand for video streaming. It may then scale down video-related resources, conserving energy, while maintaining necessary support for IoT devices, which may require consistent but less intensive connectivity. By leveraging these user and service intents, the network may ensure optimal performance, energy efficiency, and tailored service delivery, contributing to a sustainable and future-proof infrastructure. Capturing the intent and translating it into network configurations may be done immediately and in real-time upon change of intent.

According to the present disclosure, at least one of the following effects may be achieved:
Except the access networks, all parts of the proposed architecture may be based on Internet principles and technologies. It may therefore be expected that due to economies of scale and simplification compared to today's telecommunication specific equipment, significant cost savings can be achieved.

Further, the architecture may be based on the principle of intents, allowing to adapt the network in a fine-granular way to the needs of the application/user.

Additional cost savings may be achieved by moving from multiple, access network specific core networks to a single one.

The technology may be future proof: New access technologies, as long as based on IP, may be easily integrated.

A simplified network architecture may be achieved which may reduce operational complexity and streamlines management processes. By minimizing unnecessary components and dependencies, the total cost of ownership (TCO) may be reduced. Fewer components may mean less maintenance and lower energy consumption, leading to significant cost savings. Simplified networks may also easier to manage and troubleshoot, reducing downtime and enhancing network reliability and continuity.

A diversified vendor ecosystem may be provided. Leveraging common IT standards and open-source solutions may foster a diversified vendor ecosystem, reducing dependency on proprietary systems. This diversification may stimulate competition, driving innovation and cost-effectiveness. A broader vendor base may allow for more flexible and scalable solutions, enhancing the network's ability to evolve and integrate new technologies. This adaptability may be crucial for maintaining business continuity and a resilient network capable of withstanding various challenges.

Improved efficiency may be achieved. Adoption of load adaptive operation and intent-based configurations may ensure that network resources are used optimally. This may lead to improved energy efficiency and reduced operational expenditures. The ability to dynamically adjust resources in response to demand might not only cut costs but also enhance the user experience by ensuring consistent performance. Efficient use of resources may translate to better service delivery, contributing to higher customer satisfaction and loyalty.

New services and products may be enabled. By simplifying network architectures and fostering a diversified vendor ecosystem, the present disclosure may provide for a more adaptable and scalable network environment. This flexibility may be crucial for the rapid deployment and integration of innovative services and emerging technologies. Businesses may quickly respond to market demands and customer needs, introducing new offerings that enhance competitiveness and drive growth.

By integrating these principles, the principles of the present disclosure might not only transform network architecture but also deliver substantial business value across multiple dimensions, positioning the organization for sustained success and growth.

Three core objectives may be achieved by the present disclosure:
First, the goal of doubling performance and halving costs may be driven by a need to deliver superior service quality and operational efficiency. This means enhancing network performance to twice its current capability while simultaneously reducing overall costs by half. This objective may ensure that the network infrastructure can support growing demand and evolving technological requirements without escalating expenses.

Second, the principle of "zero bits, zero watts" may aim to reach an unprecedented level of energy efficiency by ensuring no energy is wasted when no data is being transmitted. This commitment to sustainability may underscore the reduction of the carbon footprint associated with network operations.

Third, new business opportunities may be opened.

To achieve these objectives, at least one of the following principles may be applied:
- Adoption of load adaptive operation: Dynamically adjusting network resources in response to real-time demand. This may enhance energy efficiency and significantly reduce operational costs, creating a more sustainable and cost-effective network infrastructure.
- Focus on simplification: Streamlining of network structures and eliminating unnecessary complexities to enhance manageability and operational agility. Simplification may extend to the access-independent core network, ensuring seamless integration with various access technologies without dependency on any specific one. This approach may simplify the overall architecture and enhances flexibility and scalability.
- Promotion of generic IT technologies: Encouraging the diversification of the vendor ecosystem by leveraging common IT standards and open-source solutions. This strategy may reduce dependency on proprietary systems, fosters competition, and stimulates innovation among technology providers.
- Implementation of intent-based operation: Allowing the network to autonomously interpret high-level business objectives and translating them into specific configurations and actions. This may ensure optimal resource utilization and align network operations with broader strategic goals, adapting dynamically to varying conditions and demands.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method for a mobile telecommunication network for controlling access of user equipment, UE, to an external network, using a walled garden environment in a core network, wherein the walled garden environment is configured to allow, before authentication of the UE, only at least one pre-approved service to the UE, the method comprising:
receiving, at the core network, a connection request from the UE, the connection request further comprising authentication data of the UE;
routing the connection request into the walled garden environment;
determining, based on the authentication data, an access policy for the UE; and
establishing bidirectional data communication between the UE and the external network.

2. The method of claim 1, wherein determining the access policy for the UE comprises validating the authentication data against a distributed ledger that maintains digital trust credentials for the UE.

3. The method of claim 1 or 2, wherein the bidirectional data communication is established by a programmable transport network.

4. The method of any one of claims 1 to 3, wherein routing the connection request into the walled garden environment comprises:
isolating the connection request within a logically isolated subnetwork established in the core network;
providing, within the logically isolated subnetwork, a dedicated authentication interface for the UE; and
enforcing a restriction on data communication with external networks until the UE's authentication data has been validated and an access policy for the user equipment has been determined.

5. The method of claim 5, further comprising:
instruct, upon successful authentication, at least one external network to grant access to the UE.

6. The method of any one of claims 1 to 5, wherein the core network is a common core network that is agnostic with respect to an access technology.

7. The method of any one of claims 1 to 6, wherein the bidirectional data communication is based on native IP packets exchanged between the UE and the common core network.

8. A computer program comprising instructions which, when the program is executed on a computer, causes the computer to carry out the method of any one of claims 1 to 7.

9. A core network comprising processing circuitry configured to:
receive a connection request from user equipment, UE, the connection request further comprising authentication data of the UE;
route the connection request into a walled garden environment within the core network;
determine, by the walled garden environment and based on the authentication data, an access policy for the UE; and
establish bidirectional data communication between the UE and an external network.

10. The core network of claim 9, wherein the walled garden environment comprises a logically isolated subnetwork within the core network that includes a dedicated authentication interface and policy enforcement circuitry, the subnetwork being configured to restrict data communication with external networks until the user equipment's authentication data has been validated and an access policy has been determined.

11. An apparatus for a core network, the apparatus comprising processing circuitry configured to:
provide a logically isolated subnetwork configured to segregate connection requests from user equipment, UE, from the remainder of the core network;
receive authentication data from the UE;
restrict data communication with external networks until the received authentication data is validated; and
communicate with a core network controller for updating access policies based on the authentication data.

12. A user equipment, UE, comprising processing circuitry configured to:
send a connection request to a core network, wherein the connection request comprises authentication data for a walled garden environment of the core network, wherein, before authentication, the UE is only allowed to use at least one pre-approved service via the walled garden;
request, after successful authentication, access to an external network;
perform bidirectional data communication with the external network.

## Amended claims

### Amended claims in accordance with Rule 137(2) EPC.

1. A method for a mobile telecommunication network (200) for controlling access of user equipment, UE, (210, 910) to an external network, using a walled garden environment in a core network (230, 940), wherein the walled garden environment is configured to allow, before authentication of the UE, only at least one pre-approved service to the UE, the method comprising:
receiving, at the core network, a connection request from the UE, the connection request further comprising authentication data of the UE;
routing the connection request into the walled garden environment;
determining, based on the authentication data, an access policy for the UE; and
establishing bidirectional data communication between the UE and the external network.

2. The method of claim 1, wherein determining the access policy for the UE comprises validating the authentication data against a distributed ledger that maintains digital trust credentials for the UE.

3. The method of claim 1 or 2, wherein the bidirectional data communication is established by a programmable transport network.

4. The method of any one of claims 1 to 3, wherein routing the connection request into the walled garden environment comprises:
isolating the connection request within a logically isolated subnetwork established in the core network;
providing, within the logically isolated subnetwork, a dedicated authentication interface for the UE; and
enforcing a restriction on data communication with external networks until the UE's authentication data has been validated and an access policy for the user equipment has been determined.

5. The method of claim 5, further comprising:
instruct, upon successful authentication, at least one external network to grant access to the UE.

6. The method of any one of claims 1 to 5, wherein the core network is a common core network that is agnostic with respect to an access technology.

7. The method of claim 6, wherein the bidirectional data communication is based on native **IP** packets exchanged between the UE and the common core network.

8. A computer program comprising instructions which, when the program is executed on a computer, causes the computer to carry out the method of any one of claims 1 to 7.

9. A core network (230, 940) comprising processing circuitry (233) configured to:
receive a connection request from user equipment, UE, (210, 910) the connection request further comprising authentication data of the UE;
route the connection request into a walled garden environment within the core network;
determine, by the walled garden environment and based on the authentication data, an access policy for the UE; and
establish bidirectional data communication between the UE and an external network.

10. The core network of claim 9, wherein the walled garden environment comprises a logically isolated subnetwork within the core network that includes a dedicated authentication interface and policy enforcement circuitry, the subnetwork being configured to restrict data communication with external networks until the user equipment's authentication data has been validated and an access policy has been determined.

11. An apparatus (231) for a core network (230, 940), the apparatus comprising processing circuitry (233) configured to:
provide a logically isolated subnetwork configured to segregate connection requests from user equipment, UE, (210, 910) from the remainder of the core network;
receive authentication data from the UE;
restrict data communication with external networks until the received authentication data is validated; and
communicate with a core network controller for updating access policies based on the authentication data.

12. A user equipment, UE, (210, 910) comprising processing circuitry (213) configured to:
send a connection request to a core network (230, 940), wherein the connection request comprises authentication data for a walled garden environment of the core network, wherein, before authentication, the UE is only allowed to use at least one pre-approved service via the walled garden;
request, after successful authentication, access to an external network;
perform bidirectional data communication with the external network.
